# EUROPÄISCHE PATENTSCHRIFT

(11) **EP 3 771 525 B1**
(45) Veröffentlichungstag und Bekanntmachung des Hinweises auf die Patenterteilung: **30.11.2022**
(21) Anmeldenummer: 19405011.8
(22) Anmeldetag: 30.07.2019
(51) Int. Cl.: B25J 19/06, B01L 1/04, B25J 21/02, G21F 7/04

(54) **ANORDNUNG ZUM SCHUTZ GEGEN UNAUTORISIERTEN EINGRIFF MIT EINEM ARBEITSHANDSCHUH IN EIN CONTAINMENT**
ARRANGEMENT FOR PROTECTING AGAINST UNAUTHORIZED ACCESS TO A WORK GLOVE IN A CONTAINMENT
DISPOSITIF DE PROTECTION CONTRE LA PRÉHENSION NON AUTORISÉE À L'AIDE D'UN GANT DE TRAVAIL DANS UN CONFINEMENT

(43) Veröffentlichungstag der Anmeldung: 03.02.2021
(73) Patentinhaber: SKAN AG, 4123 Allschwil (CH)
(72) Erfinder: GEISER, Christoph Joschi, 4313 Möhlin (CH); LEHMANN, Frank Martin, 4102 Binningen (CH)
(74) Vertreter: Ullrich, Gerhard

(56) Entgegenhaltungen:
- WO-A1-2018/108956
- CH-A2- 709 889
- FR-A- 1 147 608
- US-A1- 2005 269 916
- US-A1- 2012 267 367
- US-B2- 9 589 689

## Beschreibung

### Anwendungsgebiet der Erfindung

Die vorliegende Erfindung betrifft eine Anordnung zum Schutz gegen unautorisierten Eingriff mit einem Arbeitshandschuh durch einen in einem Portflansch vorhandenen Zugang in ein Containment. Der Portflansch ist in der Frontscheibe oder der Wandung eines in einem Aufstellraum positionierten Containments eingebaut. Der Arbeitshandschuh ist am Portflansch installiert, mit dem der Bediener unter Schutzbedingungen in die Arbeitskammer des Containments eingreifen kann. Zumeist besitzt ein Containment eine Vielzahl an Portflanschen, an denen jeweils ein Arbeitshandschuh befestigt ist. Meistens befindet sich in der Arbeitskammer eine Maschinerie zur Bearbeitung von Behandlungsgut, z.B. Pharmazeutika oder biotechnische Substanzen. Zur Verhinderung von unzulässigem Eingriff mit dem Arbeitshandschuh durch den im Portflansch vorhandenen Zugang in die Arbeitskammer des Containments ist zur temporären Blockierung des Zugangs ein Absperrteil vorgesehen, das sich in eine Blockierposition und eine Offenposition bewegen lässt.

### Stand der Technik

Die Franz Ziel GmbH, D-48727 Billerbeck/Deutschland, hat auf ihrem ersten Pharma-Symposium im Februar 2019 eine Absperrvorrichtung zum Schutz gegen unautorisierten Eingriff in an Isolatoren installierten Arbeitshandschuhen vorgestellt (siehe https://www.ziel-gmbh.com/de/newsarea/news-details/erstes-pharma-symposium-bei-der-franz-ziel-gmbh.html; Internetauszug vom 18.07.2019). Diese Absperrvorrichtung besteht aus einem im Prinzip kreuzförmigen Deckel, welcher sich von aussen auf den Zugang des Portflansches aufsetzen und mittels Schliessmechanik verriegeln lässt, so dass nur ein Bediener, der den passenden Schlüssel besitzt, den Deckel entfernen und sich somit Zugang verschaffen kann.

Eine weitere derartige Absperrvorrichtung wurde vom Firmenverbund OPTIMA pharma GmbH, D-74523 Schwäbisch Hall/Deutschland zusammen mit der METALL+PLASTIC GmbH, D-78315 Radolfzell/Deutschland, auf der Messe Achema, Juni 2018, Frankfurt am Main/Deutschland, offeriert (siehe https://www.optima-packaging.com/en/press-area/press-kit-2016/press-release-optima-pharma-and-metallplastic-achema-2018; Internetauszug vom 18.07.2019). Bei dieser Absperrvorrichtung blockiert ein plattenartiger Deckel den Eingriff, wobei bei benachbarten Portflanschen die Deckel zusätzlich mit einem Querbalken verbunden sind. Sicherheitssensoren signalisieren das Öffnen der Deckel. Bei der Ausstattung mit einer Sicherheitszuhaltung wird das Öffnen erst nach Autorisation freigegeben. Ähnlich funktioniert die Absperrvorrichtung der ROBERT BOSCH GmbH, D-70442 Stuttgart/Deutschland, welche im Achema-Trendbericht Pharmaverpackungen publiziert ist (siehe https://www.pharma-food.de/achema-trendbericht-pharmaverpackungen/3/; Internetauszug vom 18.07.2019).

Schliesslich offeriert die I.M.A. Industria Macchine Automatiche S.p.A. IT-40064, Ozzano dell'Emilia (Bo)/Italien, eine Absperrvorrichtung an einem Isolator für den hiesigen Zweck (siehe https://ima.it/pharma/machine/barrier-technology-open-closed-rabs/; Internetauszug vom 18.07.2019). Der Eingriff in den Portflansch und damit in den hier befestigten Arbeitshandschuh wird mit einem arretierbaren Deckel versperrt, der mit einem Sicherheitssensor und einer Sicherheitszuhaltung ausgestattet ist und sich erst bei erteilter Autorisation zur Seite, in die Freigabeposition, schwenken lässt.

Die WO 2018/108 956 A1 offenbart eine Anordnung zum Schutz gegen unautorisierten Eingriff mit einem Arbeitshandschuh durch einen in einem Portflansch vorhandenen Zugang in ein Containment nahe dem Prinzip des Oberbegriffs von Anspruch 1. Die CH 709 889 A2 betrifft ein elektronisches Identifikationssystem zur Erkennung der Präsenz einer Bedienperson an einem Containment, wobei die Bedienperson einen Transponder basierend auf der RFID-Technik trägt und am Containment eine Leseeinheit angeordnet ist, die bei Eintritt der mit dem Transponder ausgestatteten Bedienperson deren Präsenz signalisiert. Die US 2005/0 269 916 A1, FR 1 147 608 A und die US 9,589,689 B2 haben zum Eingriff in Containments bestimmte Glove-boxen zum Gegenstand.

### Aufgabe der Erfindung

Ausgehend vom vorbekannten Stand der Technik liegt der Erfindung die Aufgabe zugrunde, eine weiterentwickelte Anordnung zum Schutz gegen unautorisierten Eingriff mit einem Arbeitshandschuh durch einen in einem Portflansch vorhandenen Zugang in die Arbeitskammer eines Containments zu schaffen. Hierbei ist davon auszugehen, dass das Containment zumeist eine Vielzahl an Portflanschen besitzt, die alle jeweils mit einem Arbeitshandschuh versehen sind, und sich in der Arbeitskammer oftmals eine Maschinerie zur Bearbeitung von Behandlungsgut befindet. Damit soll erreicht werden, nicht autorisierte Eingriffe von Bedienern, als "uncontrolled human interventions" auszuschliessen und so insbesondere die Produktion von Pharmazeutika verlustfreier und sicherer zu machen

und eine allumfassende Protokollierung sämtlicher Handlungen am Portflansch zu gewährleisten. Eine zusätzliche Aufgabe besteht darin, einen Arbeitshandschuh so zu gestalten, dass dieser zum Schutz gegen den unautorisierten Eingriff ein Absperrteil selbst bereitstellt oder in Kombination mit einem separaten Absperrteil einsetzbar ist.

### Übersicht über die Erfindung

Bei der zum Schutz gegen unautorisierten Eingriff mit einem Arbeitshandschuh durch einen in einem Portflansch vorhandenen Zugang in ein Containment konzipierten Anordnung, ist der Portflansch in herkömmlicher Weise in einer Frontscheibe oder in einer Wandung eines Gehäuses des in einem Aufstellraum positionierten Containments eingebaut. Wie üblich, ist am Portflansch der Arbeitshandschuh installiert, welcher einem Bediener ermöglicht, geschützt in die Arbeitskammer des Containments hineinzulangen. Bei einer Vielzahl am Containment installierter Portflanschen ist jeweils ein Arbeitshandschuh am jeweiligen Portflansch befestigt. Oftmals ist in der Arbeitskammer eine Maschinerie zur Bearbeitung eines Behandlungsguts vorhanden. Zur temporären Blockierung des Zugangs ist ein Absperrteil vorgesehen, das sich in eine Blockierposition und eine Offenposition bewegen lässt. Zur Aufnahme von Personaldaten des Bedieners weist die Anordnung eine Erfassungseinheit auf, die eine Verbindung zu einem Microcontroller besitzt, um bei Korrespondenz zwischen den erfassten Personaldaten und den Daten im Microcontroller an einen Aktivator einen Schaltbefehl zu erteilen, wodurch sich das Absperrteil in die Blockierposition bringen bzw. daraus in die Offenposition bewegen lässt und somit der Zugang gesperrt bzw. zugänglich ist. Der Aktivator ist am Portflansch oder am Absperrteil angeordnet. Die Daten des Microcontrollers sind direkt darin hinterlegt oder stammen von einer externen Steuereinheit.

Die Erfassungseinheit zur Aufnahme von Personaldaten des Bedieners ist dem jeweiligen Portflansch oder dem jeweiligen Absperrteil zugeordnet. Bei Korrespondenz zwischen den erfassten Personaldaten und den Daten im Microcontroller erhält der Aktivator den Schaltbefehl, um dem Bediener zu ermöglichen, dieses bestimmte Absperrteil an diesem bestimmten Portflansch aufzusetzen und in die Blockierposition bringen bzw. zu entriegeln und von diesem bestimmten Portflansch abzunehmen, wodurch der Zugang gesperrt bzw. zugänglich ist.

In besonders vorteilhafter Ausgestaltung ist die Erfassungseinheit zur Aufnahme von Personaldaten des Bedieners direkt im jeweiligen Portflansch oder im jeweiligen Absperrteil enthalten. Alternativ kann die Erfassungseinheit für sämtliche betroffenen Portflansche und Absperrteile des Containments in einem mobilen Gerät, z.B. einem Tabletcomputer, eingerichtet sein.

Die Erfassungseinheit ist zur Aufnahme biometrischer Kennzeichen des Bedieners, eines vom Bediener einzugebenden Codes oder der elektronischen Daten eines vom Bediener vorzuweisenden Datenträgers bestimmt. Hierbei wird je nach der von der Erfassungseinheit vom Bediener aufgenommenen Kennung, im Zusammenwirken mit dem Microcontroller, dem betreffenden Bediener durch Schalten des Aktivators, je nach im Microcontroller hinterlegten Daten bzw. über die Steuereinheit eingeholter Daten, die Autorisation zur Verstellung des Absperrteils in die Blockier- oder Offenposition am betreffenden Portflansch erteilt oder ansonsten verweigert.

Das Absperrteil ist:
- direkt in den Portflansch integriert und schwenkbar, aufspannbar, jalousieartig oder expandierbar ausgebildet; oder
- als separater an den Portflansch andockbarer bzw. davon entfernbarer Verschlusskörper beschaffen; oder
- lösbarer Bestandteil eines zu einem Handschuheinsatz komplettierten Handschuhs.

Das Absperrteil kann in der Konfiguration als im Portflansch integrierter Verschlusskörper ausgebildet sein, wobei Portflansch und Absperrteil jeweils mit einem Sicherheitssensor versehen sind. Hierbei dienen die beiden Paare von Sicherheitssensoren dazu, im Zusammenwirken mit einem externen Sicherheitsrelais, die Stellung des Absperrteils im Portflansch zu erfassen und bei offenstehendem Absperrteil ein automatisches Blockieren der Maschinerie zu schalten.

Alternativ kann das Absperrteil in der Konfiguration als separater, an den Portflansch andockbarer bzw. davon entfernbarer Verschlusskörper ausgebildet sein. Wiederum sind Portflansch und Absperrteil jeweils mit einem Sicherheitssensor versehen. Nun dienen die beiden Sicherheitssensoren dazu, im Zusammenwirken mit einem externen Sicherheitsrelais, die Stellung des Absperrteils in Relation zum Portflansch zu erfassen und bei Distanzierung des Absperrteils vom Portflansch ein automatisches Blockieren der Maschinerie zu schalten.

Bei einer weiteren Alternative kann das Absperrteil in der Konfiguration als mit dem Handschuheinsatz lösbar verbundener Verschlusskörper, der am Portflansch verriegelbar bzw. davon abnehmbar ist, ausgebildet sein. Absperrteil und Portflansch sind erneut jeweils mit einem Sicherheitssensor bestückt. Erneut sind die beiden Paare von Sicherheitssensoren dazu bestimmt, im Zusammenwirken mit einem externen Sicherheitsrelais, die Stellung des Absperrteils in Relation zum Portflansch zu erfassen und bei Distanzierung des Absperrteils vom Portflansch ein automatisches Blockieren der Maschinerie zu schalten.

Der Steuereinheit und dem damit jeweils pro Portflansch zusammenwirkenden Sicherheitsrelais ist jeweils ein Sender/Empfänger zugeordnet. Hierbei dient der Sicherheitssensor im Portflansch bzw. im Absperrteil - in Gestalt als aktiver Sicherheitssensor - zum Erkennen, ob der komplementäre Sicherheitssensor im Absperrteil bzw. im Portflansch - hier in Gestalt als passiver Sicherheitssensor - präsent ist. Ein Sende-/Empfangselement würde dem Sender/Empfänger eine Nichtpräsens des passiven Sicherheitssensors drahtlos signalisieren, worauf der Sender/Empfänger die Nichtpräsens des passiven Sicherheitssensors an das Sicherheitsrelais weitermeldet und die Maschinerie automatisch blockiert.

Das Absperrteil - in der Konfiguration als separater an den Portflansch andockbarer bzw. davon entfernbarer Verschlusskörper - oder der Portflansch sind versehen mit:
- der Erfassungseinheit, dem Microcontroller und einem Aktivator, welcher manuell oder angetrieben betätigbar ist und der Verstellung des Absperrteils in die Blockier- oder Offenposition dient; sowie
- optional mit einem Display und einem Akku.

Der Portflansch ist mit einem RFID-Chip bestückt, und das Absperrteil - in der Konfiguration als separater an den Portflansch andockbarer bzw. davon entfernbarer Verschlusskörper - ist mit einem Sende-/Empfangselement versehen. Hierbei dient das Sende-/Empfangselement dazu, beim Ansetzen des Absperrteils an den Portflansch diese Paarung zu detektieren und gemäss der in der Steuereinheit bzw. im Microcontroller hinterlegten Daten, das Verriegeln des Absperrteils zuzulassen bzw. zu versagen.

Jeder Arbeitshandschuh weist einen RFID-Chip auf, welcher eine individuelle Seriennummer und vorzugsweise zusätzlich seine Herstellungsdaten abgespeichert hat, die sich mittels des Sende-/Empfangselements auslesen lassen und in der Steuereinheit und/oder im Microcontroller hinterlegt sind. Ausserdem wird jede neue Handlung am Portflansch und am Arbeitshandschuh mittels der Steuereinheit erfasst und darin zum betreffenden Arbeitshandschuh abgespeichert, also den individuellen Lebenslaufdaten hinzugefügt.

Die Herstellungsdaten jedes Arbeitshandschuhs können die individuelle Seriennummer, das Herstellungsdatum, die Handschuhgrösse, die Materialart, das angewendete Sterilisationsverfahren und das maximale Verwendungsdatum umfassen. Und die Lebenslaufdaten jedes Arbeitshandschuhs können umfassen:
- das Installationsdatum in einen Portflansch;
- die Personaldaten des Installateurs;
- die Kennung an welchem Portflansch die Installation erfolgte;
- wann, wie oft und von welchem Bediener das Absperrteil am betreffenden Arbeitshandschuh in die Blockierposition gebracht bzw. daraus in die Offenposition bewegt wurde;
- Zeitpunkt und Zählung der Anzahl von Dekontaminationszyklen an der Arbeitskammer des Containments sowie die maximal zulässige Anzahl von Dekontaminationszyklen;
- Zeitpunkt und Anzahl der durchgeführten Lecktests am betreffenden Arbeitshandschuh;
- die Chargen und Produkte, welche in der Arbeitskammer des Containments gehandhabt werden und bei denen der betreffende Arbeitshandschuh in Verwendung ist;
- vom Bediener manuell einzugebende spezielle Vorkommnisse; und
- die Personaldaten des Installateurs, welcher den Ausbau und die Entsorgung des betreffenden Arbeitshandschuhs durchführt.

Der Handschuheinsatz ist als in den Portflansch gasdicht einsetzbare Baugruppe ausgebildet und besteht aus einer einerseits angeordneten entfernbaren bzw. zu öffnenden Versiegelung, und andererseits aus dem von der Baugruppe lösbaren halbschalenförmigen Absperrteil und dem zwischen beiden vakuumiert verpackten Arbeitshandschuh. Der als Baugruppe beschaffene Handschuheinsatz besitzt ferner:
- ein Fixierteil, das eine komplementäre Geometrie zum Portflansch aufweist, also ringförmig oder oval beschaffen ist, und zur Befestigung am Portflansch dient;
- einen Fortsatz, der zum Zusammenwirken mit einem sich vom Portflansch erstreckenden schaltbaren Haltelement bestimmt ist, um das Absperrteil temporär zu sichern; und
- einen im Fixierteil des Handschuheinsatzes angeordneten RFID-Chip. Zusätzlich könnte am Absperrteil eine Magnetzone vorhanden sein, die zum Zusammenwirken mit dem Fixierteil bestimmt ist, um zur Festigkeit der Verbindung zwischen Absperrteil und Portflansch beizutragen.

Alternativ zum Absperrteil kann der Handschuheinsatz eine aufgesetzte Abdeckung haben und ergibt so ebenfalls eine in den Portflansch gasdicht einsetzbare Baugruppe, bestehend aus der einerseits angeordneten entfernbaren bzw. zu öffnenden Versiegelung, und andererseits aus der von der Baugruppe lösbaren haubenartigen Abdeckung und dem zwischen beiden vakuumiert verpackten Arbeitshandschuh. Auch diese Ausführungsform des Handschuheinsatzes mit der Abdeckung, anstelle des Absperrteils, besitzt ferner:
- ein Fixierteil, das zur Befestigung am Portflansch dient; und
- einen im Fixierteil des Handschuheinsatzes angeordneten RFID-Chip. Zusätzlich könnte an der Abdeckung eine Magnetzone vorhanden sein, die zum Zusammenwirken mit dem Fixierteil bestimmt ist, um die Abdeckung temporär zusätzlich zu sichern.

Bei auf dem Handschuheinsatz aufsitzendem Absperrteil bzw. aufsitzender Abdeckung und im Zustand der unversehrten Versiegelung herrscht im Innenvolumen des Handschuheinsatzes zwischen der Versiegelung und der Handschuhoberfläche ein Unterdruck. Das Innenvolumen des Handschuheinsatzes, die diesem zugewandte Fläche der Versiegelung sowie die Handschuhoberfläche sind steril.

Das an sich freie Ende des Handschuhs ist am Fixierteil und/oder nahe dem Fixierteil an der Versiegelung befestigt, wobei die Versiegelung die lichte Weite des Fixierteils zumindest im Wesentlichen überspannt. Bei auf dem Handschuheinsatz aufsitzendem Absperrteil oder aufsitzender Abdeckung und im Zustand intakter Versiegelung, ist die Versiegelung visuell erkennbar konkav zum Handschuheinsatz infolge des darin herrschenden Unterdrucks gekrümmt.

### Kurzbeschreibunq der beigefügten Zeichnungen

Es zeigen:
Figur 1 - ein in einem Aufstellraum positioniertes Containment mit in dessen Frontscheibe eingesetztem Portflansch, daran fixiertem Arbeitshandschuh, vom Zugang entferntem Absperrteil und einem durch den freien Zugang in den Arbeitshandschuh hineinlangenden Bediener gemäss Stand der Technik;
Figuren 2A bis 2F: die erfindungsgemässe Anordnung in einer *ersten Ausführungsform,* als Prinzipdarstellungen;

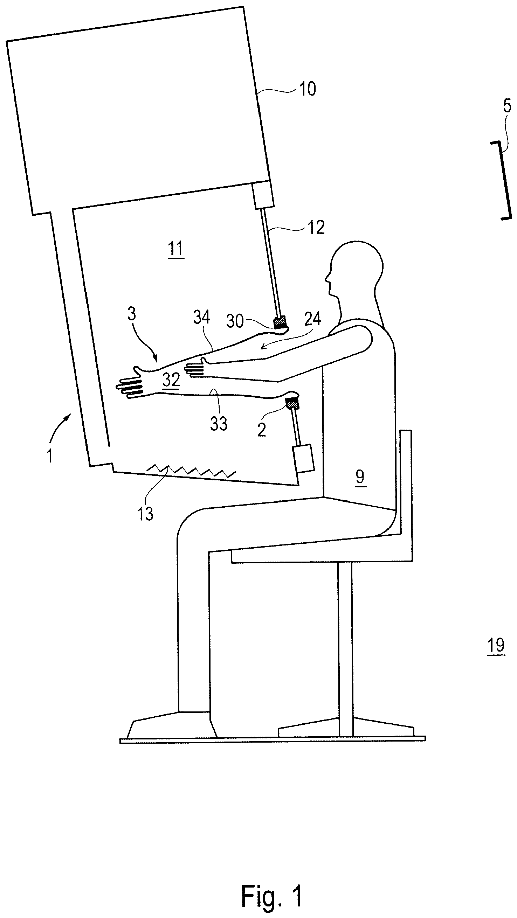

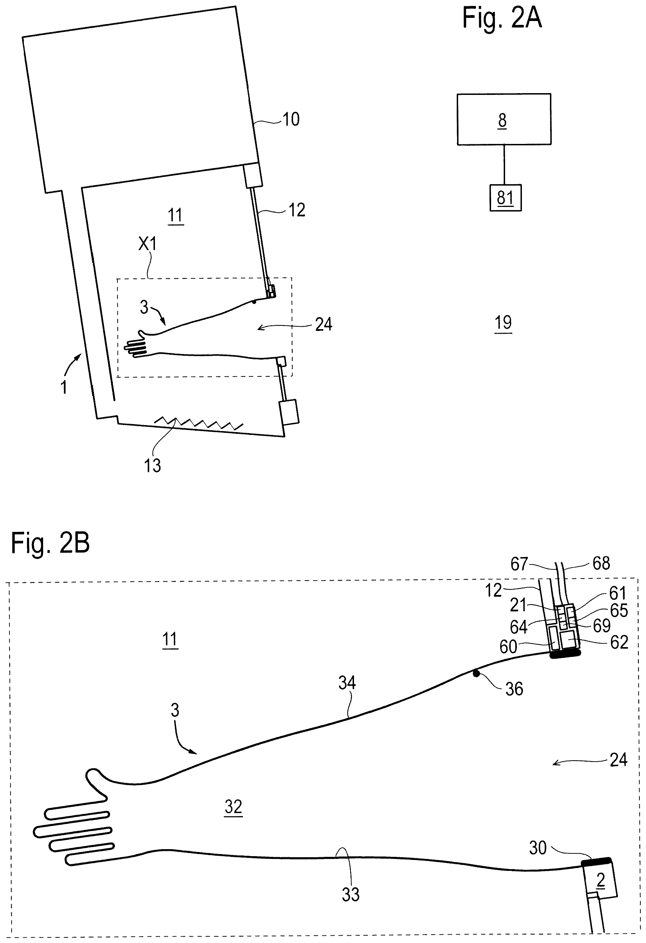

Figur 2A - das Containment aus Figur 1 mit in den Portflansch integriertem (nicht sichtbarem) Absperrteil, gegenwärtig in Offenposition, im Portflansch angeordneten Elektronikkomponenten, drahtgebundene Version, und zugehöriger Steuereinheit;
Figur 2B - aus Figur 2A das vergrösserte Detail X1;

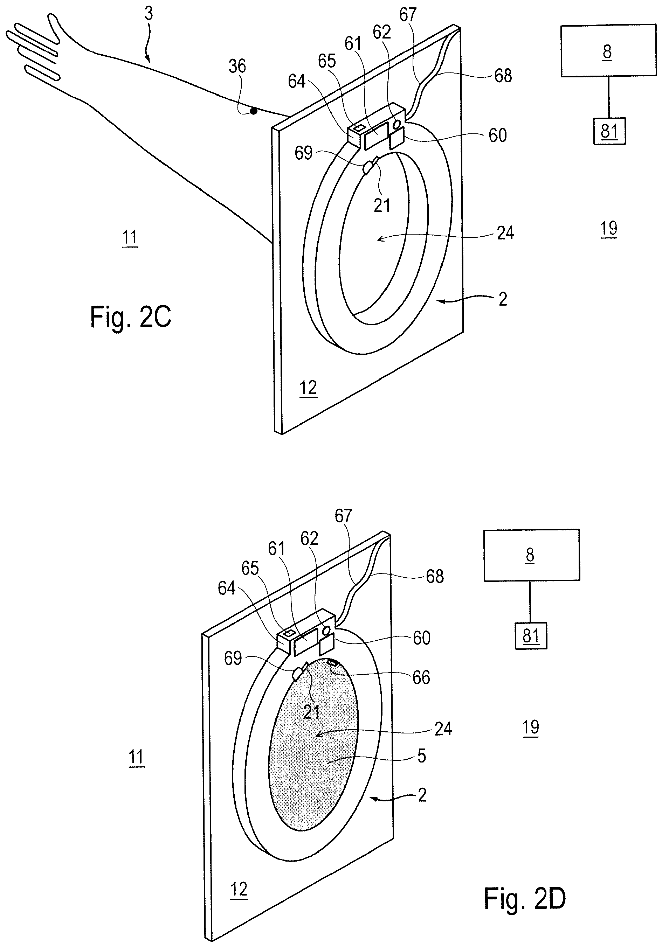

Figur 2C - aus Figur 2A das vergrösserte Detail X1, in Perspektivansicht;
Figur 2D - die Darstellung gemäss Figur 2C, mit dem Absperrteil in Blockierposition;

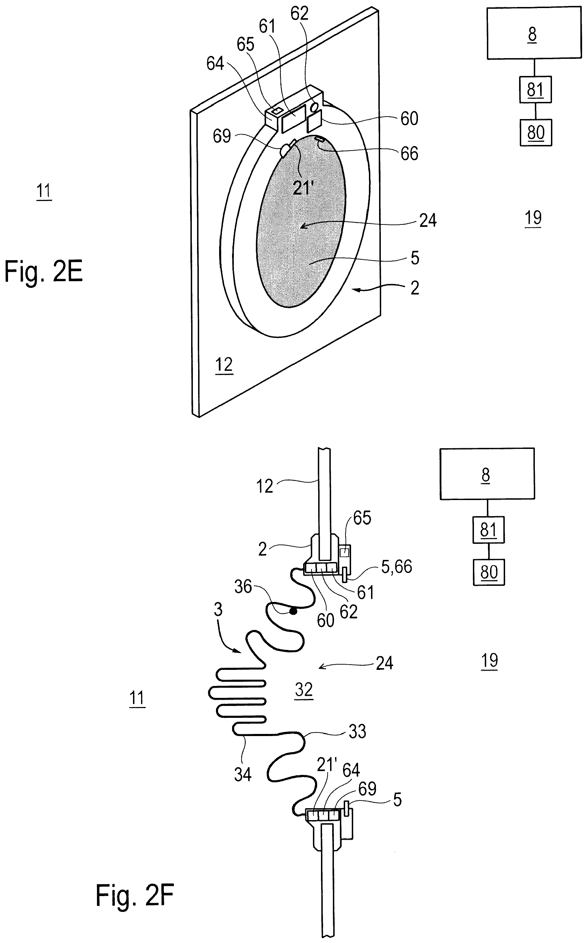

Figur 2E - die Darstellung gemäss Figur 2D, mit dem Absperrteil in Blockierposition, drahtlose Version;
Figur 2F - aus Figur 2A ein Beispiel des Absperrteils in Form einer Irisblende, mit dem Absperrteil in Offenposition, drahtlose Version;

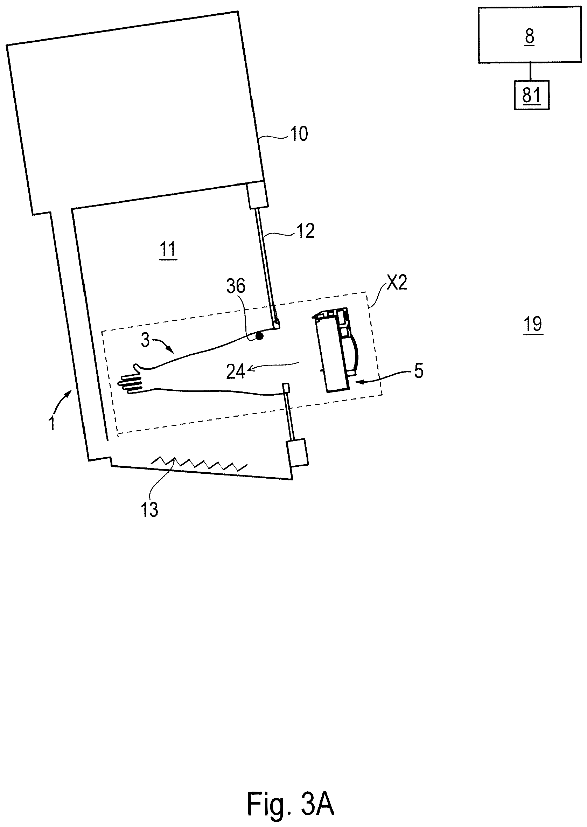

Figuren 3A bis 3F: die erfindungsgemässe Anordnung in einer *zweiten Ausführungsform,* als Prinzipdarstellungen;
Figur 3A - das Containment aus Figur 1 mit separatem Absperrteil, gegenwärtig in Offenposition, im Absperrteil angeordneten Elektronikkomponenten, drahtgebundene Version;

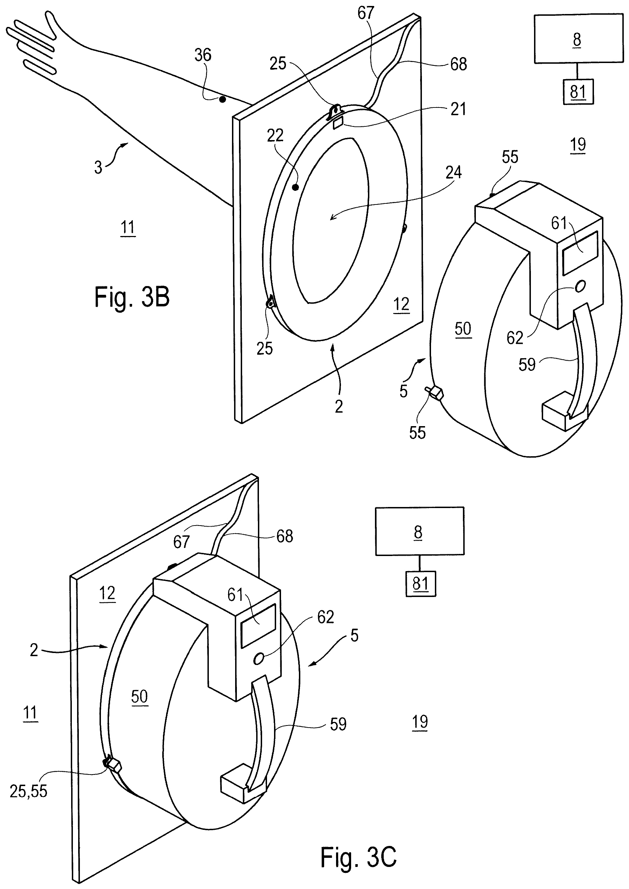

Figur 3B - aus Figur 3A das vergrösserte Detail X2, in Perspektivansicht;
Figur 3C - die Darstellung gemäss Figur 3B mit am Portflansch angedocktem Absperrteil, also in Blockierposition, darin zusammengestauchtem Arbeitshandschuh;

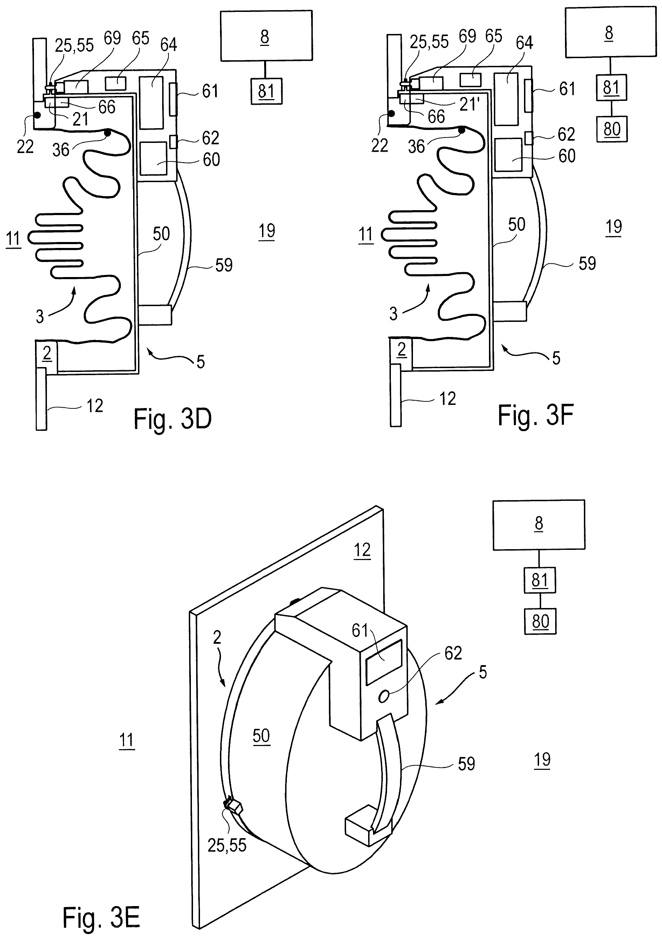

Figur 3D - die Darstellung gemäss Figur 3C, drahtgebundene Version, im Vertikalschnitt;
Figur 3E - die Darstellung gemäss Figur 3C mit am Portflansch angedocktem Absperrteil, also in Blockierposition, drahtlose Version;
Figur 3F - die Darstellung gemäss Figur 3E, im Vertikalschnitt;

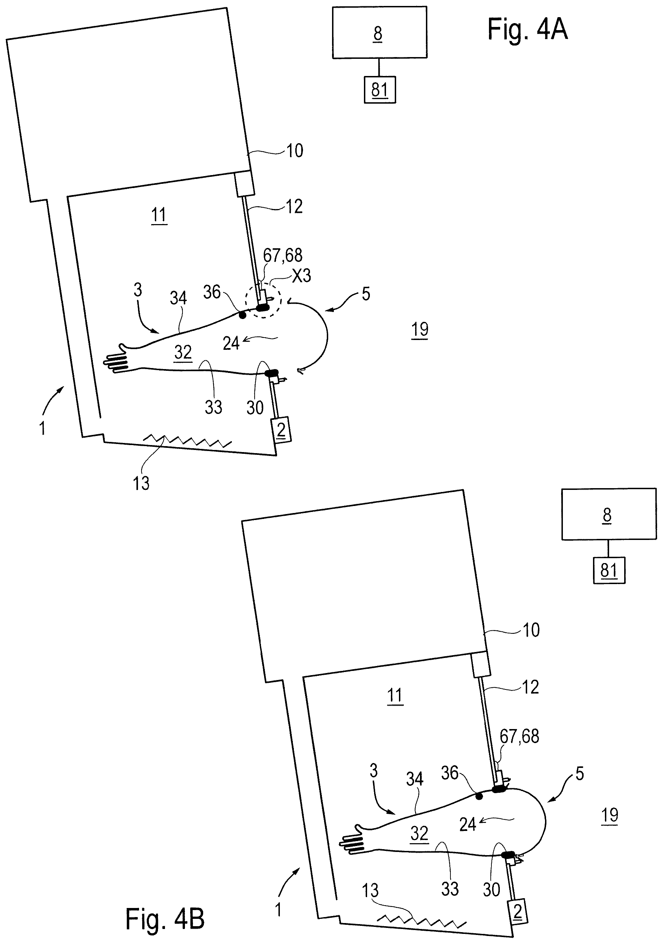

Figuren 4A bis 4F: die erfindungsgemässe Anordnung in einer *dritten Ausführungsform,* als Prinzipdarstellungen;

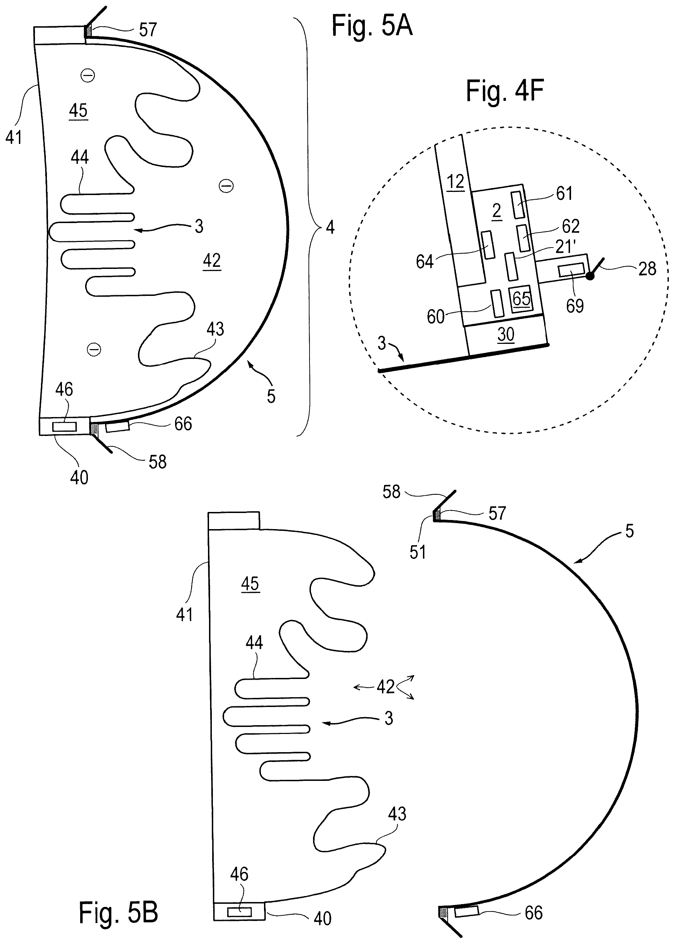

Figur 4A - das Containment aus Figur 1 mit am Arbeitshandschuh angeordnetem RFID-Chip und separatem Absperrteil aus Figur 5A, gegenwärtig in Offenposition, drahtgebundene Version;
Figur 4B - die Darstellung gemäss Figur 4A mit am Portflansch angedocktem Absperrteil, also in Blockierposition;

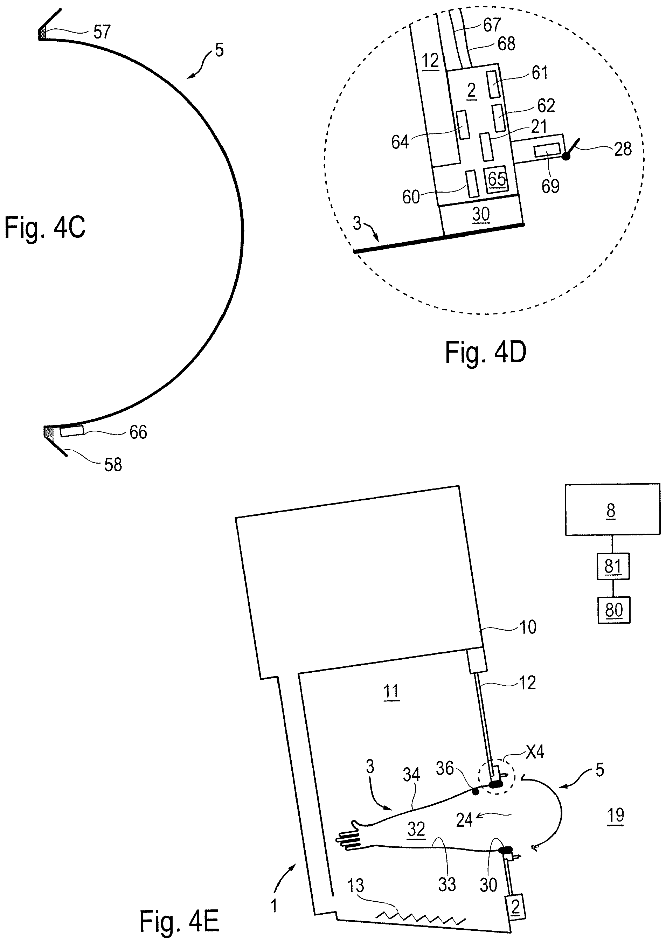

Figur 4C - das vergrösserte Absperrteil aus den Figuren 4A und 5A;
Figur 4D - aus Figur 4A das vergrösserte Detail X3;
Figur 4E - das Containment aus Figur 1 mit am Arbeitshandschuh angeordnetem RFID-Chip und separatem Absperrteil aus Figur 5A, gegenwärtig in Offenposition, drahtlose Version;
Figur 4F - aus Figur 4E das vergrösserte Detail X4;
Figur 5A - einen Arbeitshandschuh, als Einsatz ausgebildet, mit intakter Versiegelung und zugehörigem aufsitzendem Absperrteil, also in Blockierposition;
Figur 5B - die Darstellung gemäss Figur 5A mit gelöstem Absperrteil, also in Offenposition;

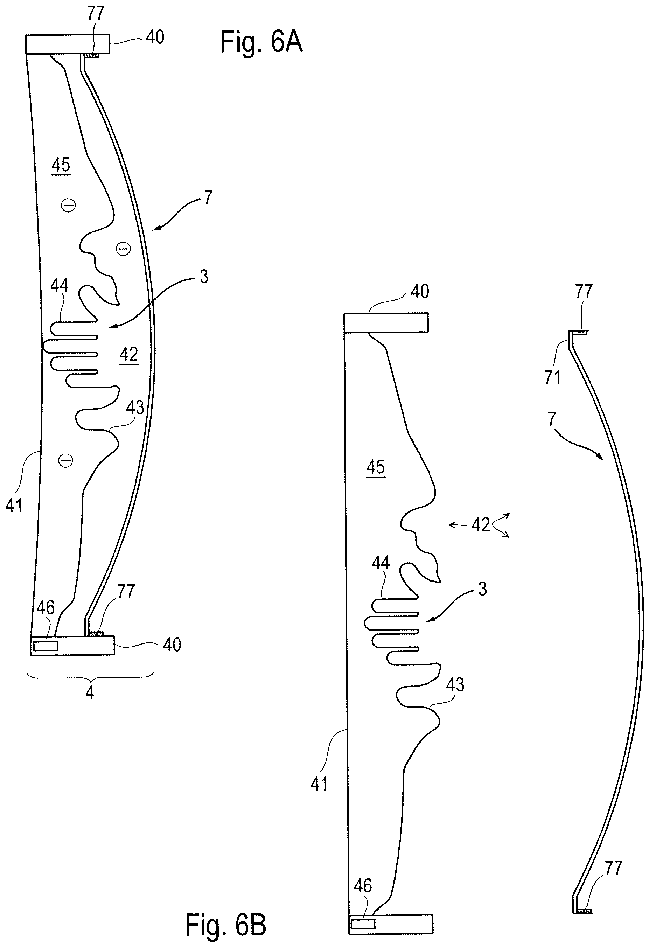

Figur 6A - einen Arbeitshandschuh, als Einsatz ausgebildet, mit intakter Versiegelung und aufsitzender Abdeckung;
Figur 6B - die Darstellung gemäss Figur 6A mit gelöster Abdeckung;

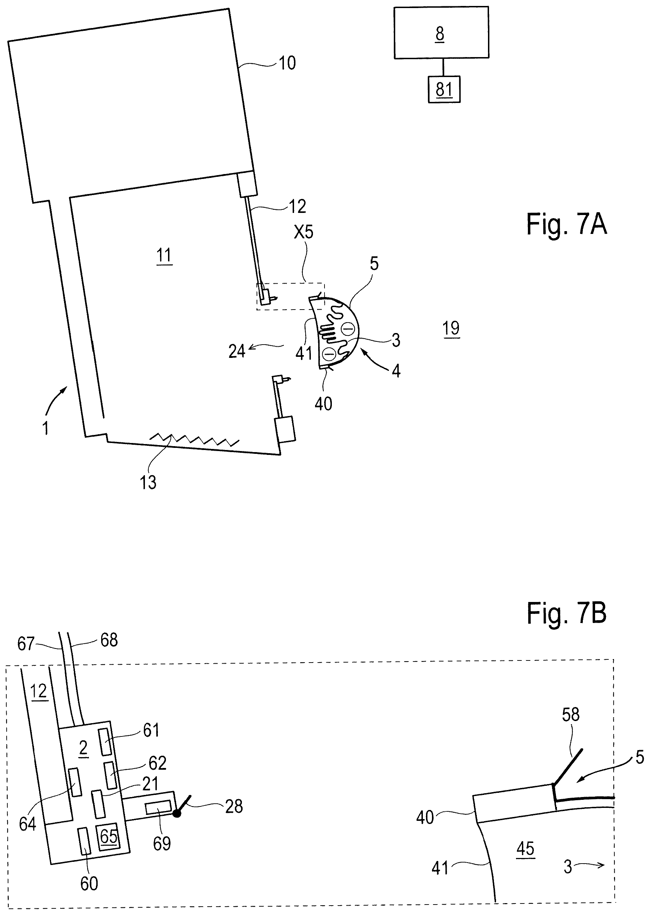

Figuren 7A bis 7G: die erfindungsgemässe Anordnung in einer *vierten Ausführungsform,* mit dem als Einsatz ausgebildeten Arbeitshandschuh und zugehörigem Absperrteil gemäss Figur 5A, als Prinzipdarstellungen;
Figur 7A - das Containment im Aufbau gemäss Figur 1, mit offenem Zugang und angenähertem Handschuheinsatz gemäss Figur 4A, drahtgebundene Version;
Figur 7B - aus Figur 7A das vergrösserte Detail X5;

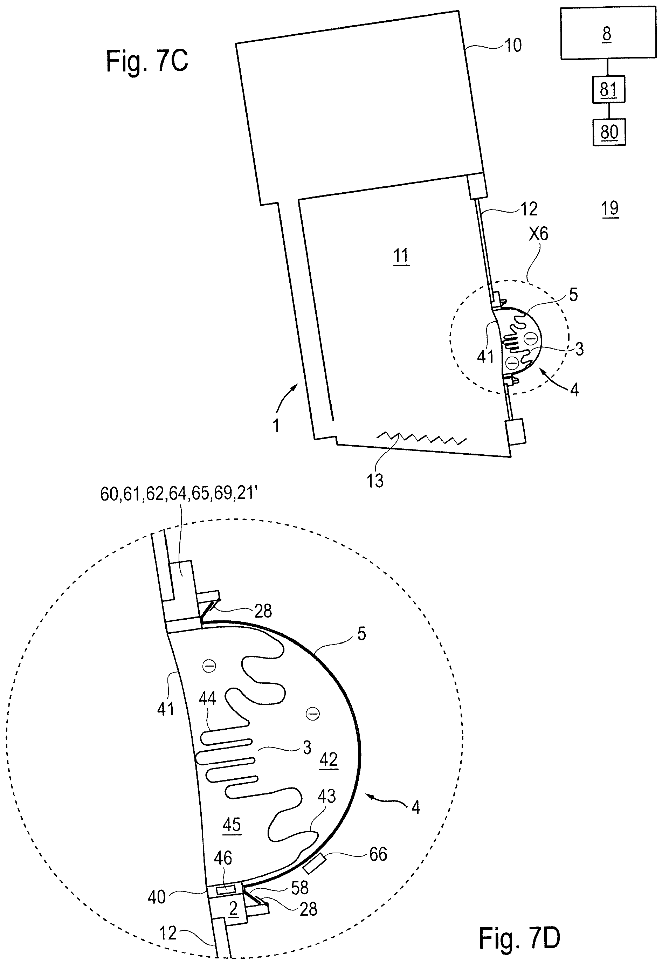

Figur 7C - die Situation gemäss Figur 7A mit auf den Portflansch aufgesetztem Handschuheinsatz, mit intakter Versiegelung und aufsitzendem Absperrteil, also in Blockierposition, drahtlose Version;
Figur 7D - aus Figur 7C das vergrösserte Detail X6;

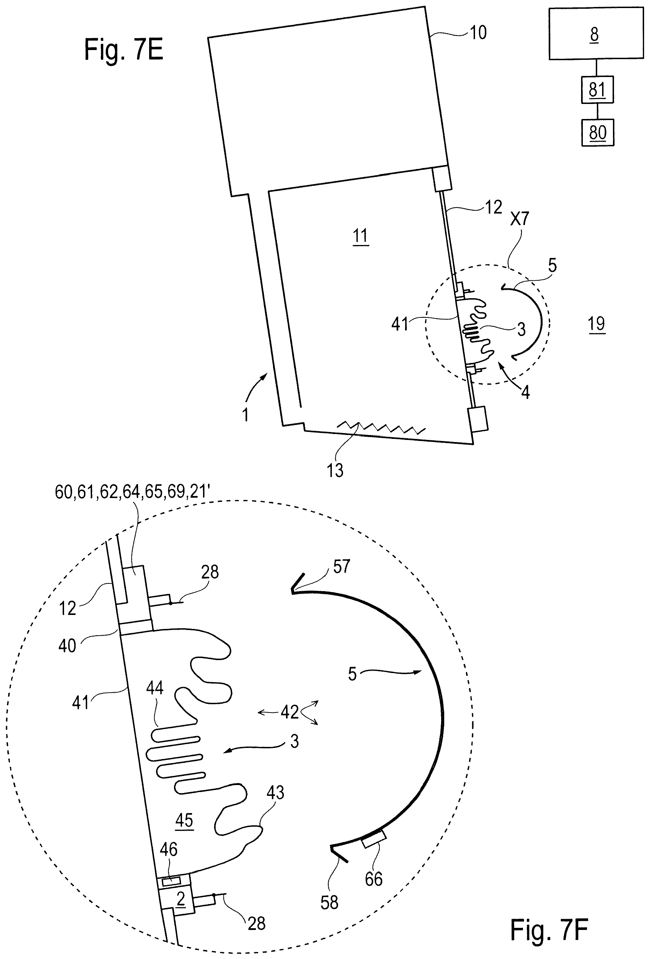

Figur 7E - die Situation gemäss Figur 7C mit auf den Portflansch aufgesetztem Handschuheinsatz und gelöstem Absperrteil, also in Offenposition, drahtlose Version;
Figur 7F - aus Figur 7E das vergrösserte Detail X7;

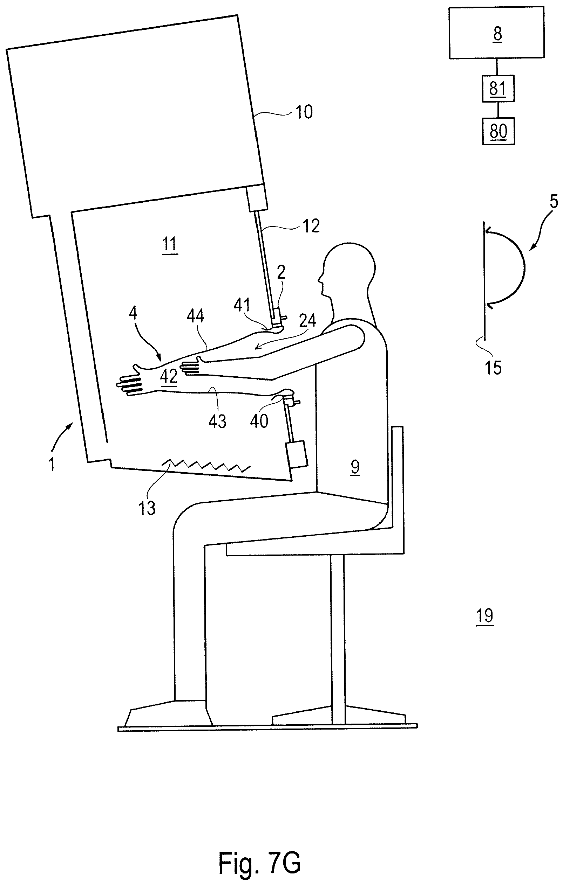

Figur 7G - die Situation gemäss Figur 7E mit am Portflansch befestigtem Handschuheinsatz, mit durchstossener Versiegelung, gelöstem Absperrteil, also in Offenposition, und dem mit dem Handschuheinsatz durch den freien Zugang in die Arbeitskammer des Containments hineinlangenden Bediener, drahtlose Version;

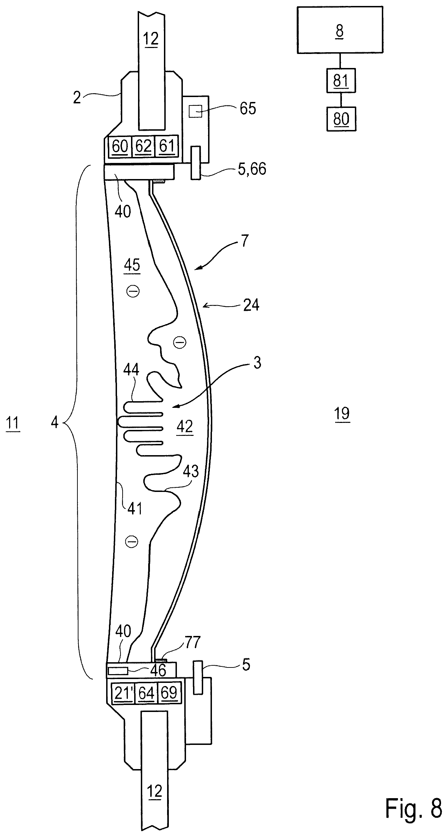

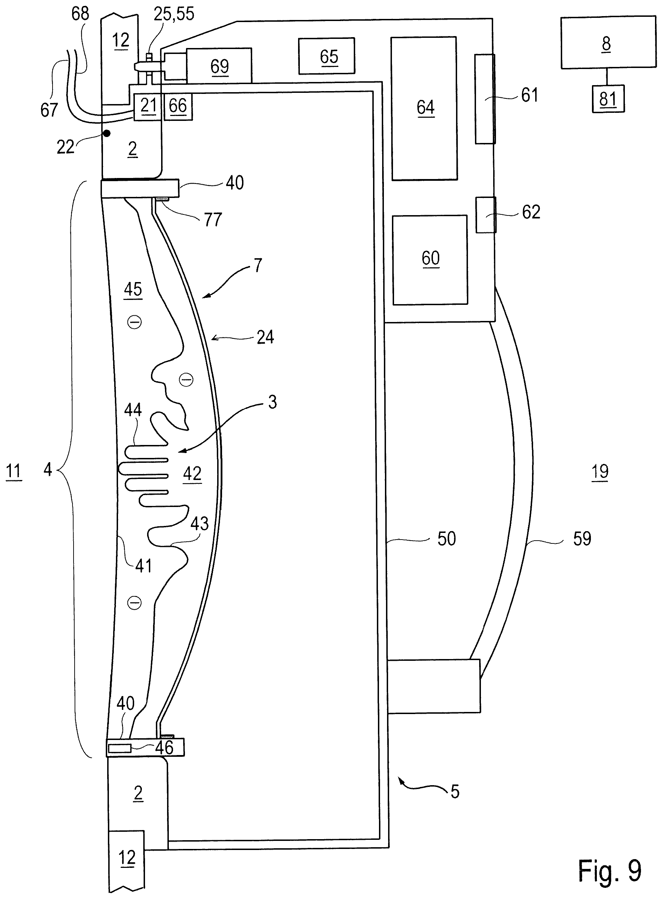

Figuren 8 und 9: Mischformen der erfindungsgemässen Anordnung, als Prinzipdarstellungen;
Figur 8 - eine Kombination mit in den Portflansch integriertem Absperrteil, gegenwärtig in Offenposition, gemäss *erster Ausführungsform* und dem Handschuheinsatz mit aufsitzender Abdeckung gemäss Figur 6A, drahtlose Version; und
Figur 9 - eine Kombination aus auf den Portflansch aufgesetztem Absperrteil gemäss *zweiter Ausführungsform,* gegenwärtig in Blockierposition, und in den Portflansch eingesetztem Handschuheinsatz mit aufsitzender Abdeckung gemäss Figur 6A, drahtgebundene Version.

### Ausführungsbeispiel

Mit Bezug auf die beiliegenden Zeichnungen erfolgt nachstehend die detaillierte Beschreibung der erfindungsgemässen Anordnung in verschiedenen Ausführungsformen zum Schutz gegen unautorisierten Eingriff mit einem Arbeitshandschuh durch einen in einem Portflansch vorhandenen Zugang in ein Containment.

Für die gesamte weitere Beschreibung gilt folgende Festlegung. Sind in einer Figur zum Zweck zeichnerischer Eindeutigkeit Bezugsziffern enthalten und dabei zeichnerisch eindeutig erkennbar ist, dass es sich um "wiederkehrende" Bauteile handelt, aber im unmittelbar zugehörigen Beschreibungstext nicht erläutert, so sei im Interesse der Verkürzung, auf deren Erklärung in vorangehenden Figurenbeschreibungen hingewiesen.

### Figur 1

Hierin ist zunächst der Stand der Technik im Prinzip dargestellt. In einem Aufstellraum **19** ist ein von einem Gehäuse **10** umgebenes Containment **1** positioniert, in dessen Frontscheibe **12** ein Portflansch **2** sitzt. Mittels des am Arbeitshandschuh **3** vorhandenen Fixierteils **30** ist dieser am Portflansch **2** befestigt. Ein Absperrteil **5,** in der Konfiguration, wie im obigen Kapitel "Stand der Technik" beschrieben, ist momentan vom Zugang **24** des Portflansches **2** entfernt, so dass der Bediener **9** seinen Arm in den Innenraum **32** des Arbeitshandschuhs **3** einführen und so geschützt durch den freien Zugang **24** in die Arbeitskammer **11** des Containments **1** eingreifen kann. Der Arbeitshandschuh **3** hat die seinem Innenraum **32** zugewandte Innenfläche **33** sowie die der Arbeitskammer **11** zugewandte Aussenfläche **34.** In der Arbeitskammer **11** ist eine zumeist darin installierte Maschinerie **13,** mit der Funktion zur Bearbeitung von Behandlungsgut, z.B. Pharmazeutika oder biotechnische Substanzen, angedeutet.

### Figuren 2A bis 2D

Diese Figurenfolge illustriert die erfindungsgemässe Anordnung zum Schutz gegen unautorisierten Eingriff mit einem Arbeitshandschuh **3** durch einen in einem Portflansch **2** vorhandenen Zugang **24** in ein Containment **1** in einer *ersten Ausführungsform* und drahtgebundener Version, mit direkt im Portflansch **2** integriertem Absperrteil **5,** z.B. schwenkbar, aufspannbar, jalousieartig, expandierbar oder als Irisblende ausgebildet. In den Figuren 2A-2C befindet sich das Absperrteil **5** in Offenposition, so dass der Zugang **24** frei ist, während die Figur 2D das Absperrteil **5** in Blockierposition zeigt und somit der Zugang **24** gesperrt ist.

### Aufbau der Anordnung

Im Portflansch **2** sind die meisten Elektronikkomponenten enthalten, nämlich ein Akku **60,** ein Display **61,** eine Erfassungseinheit **62,** ein Microcontroller **64,** ein Sende-/Empfangselement **65,** ein am beweglichen Absperrteil **5** sitzender passiver Sicherheitssensor **66** und ein am Portflansch **2** feststehender aktiver Sicherheitssensor **21.** Ausserdem ist ein Aktivator **69** im Portflansch **2** zum Verstellen des Absperrteils **5** untergebracht. Zur Signalleitung und Stromversorgung führen ein erstes Kabel **67** sowie ein zweites Kabel **68** an den Portflansch **2.** Der mit einem RFID-Chip **36** bestückte Arbeitshandschuh **3** ist mit seinem Fixierteil **30** am Portflansch **2** befestigt, und ist nur zur Veranschaulichung seiner Form, sich steif in die Arbeitskammer **11** erstreckend dargestellt. Extern vom Containment **1** befindet sich eine Steuereinheit **8,** die mit einem Sicherheitsrelais **81** verbunden ist.

### Funktionsweise der Anordnung

Nach dem Installieren der Schutzanordnung kann die Inbetriebnahme des Containments **1** erfolgen. Dazu wird zuerst der Arbeitshandschuh **3** in die richtige Position gebracht und der Zugang **24** am Portflansch **2** mittels des Absperrteils **5** geschlossen. Das Sende-/Empfangselement **65** liest die Seriennummer aus dem RFID-Chip **36** des betreffenden Arbeitshandschuhs **3** aus und hinterlegt diese in der dazu vorgesehenen Datenbank in der Steuereinheit **8.** Falls einer der Arbeitshandschuhe **3** das maximale Verwendungsdatum bereits erreicht hat, wird dies von der Steuereinheit **8** festgestellt. Der Bediener **9** wird angewiesen, einen neuen Arbeitshandschuh **3** zu installieren. Das Containment **1** startet den Betriebsmodus; die Maschinerie **13** in der Arbeitskammer **11** läuft, z.B. zwecks Abfüllung eines Medikaments.

Wenn sich ein Bediener **9** nun Zugang **24** durch den vom Absperrteil **5** blockierten Portflansch **2** verschaffen möchte, muss er sich an der Erfassungseinheit **62** identifizieren. Der Microcontroller **64** wertet die von der Erfassungseinheit **62** aufgenommenen Personaldaten mit den vorgegebenen Benutzerdaten, aus der in der Steuereinheit **8** hinterlegten Datenbank zur Zugriffsberechtigung, aus. Diese Daten können auch einzeln in jedem Microcontroller **64** hinterlegt sein. Der Microcontroller **64** kommuniziert drahtlos, z.B. über WLAN, über das Sende-/Empfangselement **65** mit der Steuereinheit **8** und übermittelt die entsprechenden Daten.

Erhält der Bediener **9** aufgrund Hierarchie, Maschinenmodus, aktuellen Prozessschrittes oder Status des Arbeitshandschuhs **3** (z.B. festgestellte Beschädigung) keine Zugriffsberechtigung, wird dies am Display **61** angezeigt und es erfolgt keine weitere Aktion. Gilt der Bediener **9** als berechtigt, wird zuerst die Maschinerie **13** kontrolliert angehalten. Danach wird die Freigabe über den Microcontroller **64** an den Aktivator **69** übermittelt, und dieser öffnet dann das mechanische Absperrteil **5,** je nach dessen Gestalt, z.B. durch Wegschwenken oder Aufdrehen. Der Bediener **9** kann nun mit dem Arbeitshandschuh **3** durch den Zugang **24** in die Arbeitskammer **11** eingreifen.

Sobald sich das vom Aktivator **69** angetriebene Absperrteil **5** hin zur Offenposition bewegt, sich also der passive Sicherheitssensor **66** vom aktiven Sicherheitssensor **21** entfernt, verliert der aktive Sicherheitssensor **21** das Signal. Der aktive Sicherheitssensor **21** übermittelt laufend sein Signal über das erste Kabel **67** an das Sicherheitsrelais **81.** Dieses stoppt die Maschinerie **13** bei einem Signalunterbruch, respektive blockiert die Maschinerie **13,** falls diese bereits abgeschaltet war. Auch das Wiederanfahren der Maschinerie **13** ist jetzt nicht möglich.

Gleichzeitig mit dem Öffnen des Absperrteils **5** wird über den Microcontroller **64** das Sende-/Empfangselement **65** aktiviert, welches den RFID-Chip **36** am zugehörigen Arbeitshandschuh **3** ausliest und dessen Seriennummer mit der in der Steuereinheit **8** hinterlegten Kennung, abgleicht. Anschliessend wird in der Steuereinheit **8** in die Datenbank für den betreffenden Portflansch **2** der aktuelle Eingriff vermerkt.

Entsteht für den Arbeitshandschuh **3** durch den neuen Gebrauch ein kritischer oder unzulässiger Zustand, wird dies dem Bediener **9** über das Display **61** am Portflansch **2** mitgeteilt. In der Datenbank der Steuereinheit **8** wird diese Information so hinterlegt, dass der weitere Gebrauch des Arbeitshandschuhs **3** nicht mehr oder nur noch unter einschränkenden Auflagen möglich ist. Diese sind individuell von einem Systemadministrator zu definieren. Ein Arbeitshandschuh **3** kann also beim Aufweisen eines Schadens, z.B. infolge ungeschickten Hantierens an der Maschinerie **13,** als "defekt und für die Charge als gesperrt" klassifiziert werden.

Im Regelbetrieb erfolgt die Stromversorgung der betreffenden Elektronikkomponenten über das zweite Kabel **68.** Der eingebaute Akku **60** dient als Notaggregat bei Stromausfall, um während einer begrenzten Zeitspanne eventuell noch relevante Aktionen am Containment **1** auszuführen.

### Figuren 2E und 2F

Dieses Figurenpaar betrifft die Anordnung ebenfalls noch in *erster Ausführungsform,* nun aber in drahtloser Version. In Figur 2E steht das Absperrteil **5** in Blockierposition, während Figur 2F das Absperrteil **5** als Irisblende beschaffen, in Offenposition zeigt.

### Aufbau der Anordnung

Der aktive Sicherheitssensor **21'** ist weiterhin feststehend am Portflansch **2** integriert und der passive Sicherheitssensor **66** sitzt wiederum am beweglichen Absperrteil **5.** Unverändert ist am Arbeitshandschuh **3** der RFID-Chip **36** angebracht, jedoch sind das erste Kabel **67** sowie das zweite Kabel **68** zur Signalleitung bzw. Stromversorgung nicht mehr vorhanden. Dem Verbund aus externer Steuereinheit **8** und Sicherheitsrelais **81** ist nun ein Sender/Empfänger **80** zugeschaltet.

### Funktionsweise der Anordnung

Die Funktionsweise ist zur Figurenfolge 2A-2D weitgehend identisch, so dass hier nur die Unterschiede beschrieben werden, welche sich durch das Entfallen der beiden Kabel **67,68** ergeben. Nun sorgt der Akku **60** im Portflansch **2** allein für die Stromversorgung der im Portflansch **2** enthaltenen Elektronikkomponenten **61, 62, 64, 65, 21'** und **69.**

Sobald sich das vom Aktivator **69** angetriebene Absperrteil **5** hin zur Offenposition bewegt, sich also der passive Sicherheitssensor **66** vom aktiven Sicherheitssensor **21'** entfernt, verliert der aktive Sicherheitssensor **21'** das Signal. Der aktive Sicherheitssensor **21'** übermittelt laufend sein Signal drahtlos über das Sende-/ Empfangselement **65** an den Sender/Empfänger **80** und dieser die Daten jedoch drahtgebunden an das Sicherheitsrelais **81.** Auch hier stoppt bei einem Signalunterbruch das Sicherheitsrelais **81** die Maschinerie **13,** bzw. blockiert die Maschinerie **13,** falls diese nicht eingeschaltet war. Auch das Wiederanfahren der Maschinerie **13** ist wiederum nicht möglich.

### Figuren 3A bis 3D

Diese Figurenfolge illustriert die Anordnung in einer *zweiten Ausführungsform* und drahtgebundener Version, mit dem Absperrteil **5,** in der Konfiguration als separater an den Portflansch **2** andockbarer bzw. davon entfernbarer haubenförmiger Verschlusskörper. In den Figuren 3A+3B befindet sich das Absperrteil **5** in Offenposition, so der Zugang **24** frei ist, und der Arbeitshandschuh **3** sich vom Portflansch **2** frei erstrecken kann, während die Figuren 3C+3D das Absperrteil **5** in Blockierposition mit gesperrtem Zugang **24** zeigen und der Arbeitshandschuh **3** dabei zusammengestaucht im haubenförmigen Absperrteil **5** liegt.

### Aufbau der Anordnung

Die meisten Elektronikkomponenten, nämlich der Akku **60,** das Display **61,** die Erfassungseinheit **62,** der Microcontroller **64,** das Sende-/Empfangselement **65** und der passive Sicherheitssensor **66** sind nun im Absperrteil **5** untergebracht, wie auch der Aktivator **69** zur Verriegelung zwischen Portflansch **2** und Absperrteil **5** bzw. zu deren Entriegelung. Der Verriegelung dienen erste Andockelemente **25** am Portflansch **2** und dazu komplementäre zweite Andockelemente **55** am Absperrteil **5.** Der aktive Sicherheitssensor **21** befindet sich am Portflansch **2,** zu dem das erste Kabel **67** und das zweite Kabel **68** als Signalleitung und zur Stromversorgung führen. Am Portflansch **2** ist ein RFID-Chip **22** angebracht, und der Arbeitshandschuh **3** hat wiederum einen weiteren RFID-Chip **36.** Das Absperrteil **5** wird im Wesentlichen von einem haubenförmigen Gehäuse **50** gebildet, das einen Griff **59** zur erleichterten Handhabung dieses Absperrteils **5** aufweist. Extern vom Containment **1** befindet sich wiederum die Steuereinheit **8,** mit dem damit verbundenen Sicherheitsrelais **81.**

### Funktionsweise der Anordnung

Die Funktionsweise ist zur Figurenfolge 2A-2D sehr ähnlich, so dass es zur Vermeidung von Wiederholungen ausreichend erscheint, hier nur die Besonderheiten zu beschreiben, welche sich durch das nun transportable Absperrteil **5,** den darin vorhandenen Aktivator **69** und die zueinander komplementären ersten und zweiten Andockelemente **25,55** ergeben.

Das Sende-/Empfangselement **65** liest die Seriennummern aus dem RFID-Chip **36** des betreffenden Arbeitshandschuhs **3** sowie aus dem RFID-Chip **22** des betreffenden Portflanschs **2** aus und hinterlegt die vom RFID-Chip **36** dieses Arbeitshandschuhs **3** erfasste Seriennummer in der dazu vorgesehenen Datenbank in der Steuereinheit **8.** Die von den RFID-Chips **22** einer Vielzahl von Portflanschen **2** erfassten Seriennummern, ermöglichen die Zuordnung eines jeweiligen Absperrteils **5** zum zugehörigen Portflansch **2.** Wird beispielsweise ein Absperrteil **5** auf einen nicht-zugehörigen Portflansch **2** aufgesetzt, und dessen Absperrteil **5** auf den anderen Portflansch **2,** so wird diese Vertauschung in der Steuereinheit **8** registriert. Je nach Ausführung wird dann das falsche Aufsetzen über das Display **62** gemeldet, oder die neuen Positionen der Absperrteile **5** überschreiben die alten Positionen. Wenn die Absperrteile **5** richtig sitzen, die ersten und zweiten Andockelemente **25,55** zueinander ausgerichtet sind, erfolgt deren Verriegelung durch die Betätigung des Aktivators **69.**

Beabsichtigt der Bediener **9** sich Zugang **24** durch den vom Absperrteil **5** blockierten Portflansch **2** zu verschaffen und wurde er als zugriffsberechtigt identifiziert, wird zuerst die Maschinerie **13** kontrolliert angehalten. Danach wird die Freigabe über den Microcontroller **64** an den Aktivator **69** übermittelt, und dieser entriegelt dann die ersten und zweiten Andockelemente **25,55** voneinander, so dass der Bediener **9** das Absperrteil **5** entfernen kann und der Zugang **24** für den Eingriff mit dem Arbeitshandschuh **3** in die Arbeitskammer **11** frei wird.

Sobald das Absperrteil **5** aus der Blockierposition entfernt wird, sich also auch der passive Sicherheitssensor **66** vom aktiven Sicherheitssensor **21** entfernt, verliert der aktive Sicherheitssensor **21** das Signal, folglich stoppt die Maschinerie **13,** respektive wird blockiert. Wie zur Figurenfolge 2A-2D beschrieben, werden der aktuelle Eingriff detektiert und in der in der Steuereinheit **8** vorhandenen Datenbank für den betreffenden Portflansch **2** vermerkt. Solange der Portflansch **2** mit dem Absperrteil **5** verriegelt ist, wird der darin eingebaute Akku **60** aus dem Netz über das zweite Kabel **68** geladen, und über das zweite Kabel **68** erfolgt auch die Stromversorgung. Wird aber das Absperrteil **5** vom Portflansch **2** entriegelt und entfernt, sorgt allein der Akku **60** für die Stromversorgung der im Absperrteil **5** enthaltenen Elektrokomponenten **61, 62, 64, 65** und **69.**

### Figuren 3E und 3F

Dieses Figurenpaar betrifft die Anordnung weiterhin in *zweiter Ausführungsform,* nun aber in drahtloser Version. Das Absperrteil **5** ist auf den Portflansch **2** aufgesetzt und mit diesem verriegelt, so dass der Zugang **24** blockiert ist und der Arbeitshandschuh **3** zusammengestaucht im haubenförmigen Absperrteil **5** liegt.

### Aufbau der Anordnung

Aufgrund des nicht mehr vorhandenen ersten Kabels **67** und zweiten Kabels **68** zur Signalleitung bzw. Stromversorgung, haben abweichend zur Figurenfolge 3A-3D, der aktive Sicherheitssensor **21'** und der passive Sicherheitssensor **66** ihre Einbaupositionen getauscht. Nun ist der passive Sicherheitssensor **66** feststehend am Portflansch **2** integriert, während der aktive Sicherheitssensor **21'** jetzt im Absperrteil **5** sitzt. Der Arbeitshandschuh **3** ist wiederum mit einem RFID-Chip **36** bestückt. Dem Verbund aus externer Steuereinheit **8** und Sicherheitsrelais **81** ist wieder der Sender/Empfänger **80** zugeschaltet.

### Funktionsweise der Anordnung

Die Funktionsweise ist zur Figurenfolge 3A-3D nahezu identisch, so dass Wiederholungen vermeidbar sind und hier nur die Unterschiede beschrieben werden, welche aus dem Wechsel der Einbaupositionen für den aktiven Sicherheitssensor **21'** und den passiven Sicherheitssensor **66** resultieren. Der Akku **60** im Absperrteil **5** sorgt für die vollständige Versorgung der darin enthaltenen Elektronikkomponenten **21', 61, 62, 64, 65** und **69.**

Sobald man vom Portflansch **2** das Absperrteil **5** abhebt und sich dadurch sein aktiver Sicherheitssensor **21'** vom im Portflansch **2** sitzenden passiven Sicherheitssensor **66** entfernt, verliert der aktive Sicherheitssensor **21'** das Signal. Der aktive Sicherheitssensor **21'** übermittelt kontinuierlich sein Signal drahtlos über das Sende-/Empfangselement **65** an den Sender/Empfänger **80** und dieser die Daten dann drahtgebunden an das Sicherheitsrelais **81.** Infolge des Signalunterbruchs stoppt das Sicherheitsrelais **81** die Maschinerie **13,** bzw. blockiert die Maschinerie **13,** falls diese nicht eingeschaltet war.

### Figuren 4A bis 4D

Diese Figurenfolge illustriert eine *dritte Ausführungsform* in drahtgebundener Version das Absperrteil **5** in der Konfiguration als separater, an den Portflansch **2** andockbarer bzw. davon entfernbarer halbschalenförmiger Verschlusskörper. In den Figuren 4A+4D befindet sich das Absperrteil **5** in Offenposition, so dass der Zugang **24** frei ist, und der Arbeitshandschuh **3** sich vom Portflansch **2** frei erstrecken kann, während die Figur 4B das Absperrteil **5** in Blockierposition mit gesperrtem Zugang **24** zeigt und sich der Arbeitshandschuh **3** in die Arbeitskammer **11** hinein erstreckt. Figur 4C veranschaulicht ein solches separates Absperrteil **5** mit seinen Konstruktionsdetails.

### Aufbau der Anordnung

Wie gemäss Figur 2B enthält der Portflansch **2** sämtliche Elektronikkomponenten **21, 60, 61, 62, 64, 65** und **69,** und wiederum ist der Arbeitshandschuh **3** mit seinem Fixierteil **30** am Portflansch **2** befestigt. Als Besonderheit ist ein hebelartiges Halteelement **28** am Portflansch **2** angebracht, das in eine Stellung "Auf' und eine Stellung "Zu" schaltbar ist. Der Arbeitshandschuh **3** ist wiederum mit einem RFID-Chip **36** bestückt. Zur Signalleitung und Stromversorgung führen die beiden Kabel **67,68** an den Portflansch **2.** Extern vom Containment **1** befindet sich wiederum die Steuereinheit **8,** mit dem damit verbundenen Sicherheitsrelais **81.** Das halbschalenförmige Absperrteil **5** ist vorzugsweise aus Kunststoff und weist an seinem Rand einen abgekanteten, hakenartigen Fortsatz **58,** eine daran angrenzende Magnetzone **57** sowie den nahe zur Magnetzone **57** sitzenden passiven Sicherheitssensor **66** auf.

### Funktionsweise der Anordnung

Die Vorkehrungen zur Inbetriebnahme der Anlage, Feststellung und Erteilung der Zugriffsberechtigung für den Bediener **9,** das Überführen des Absperrteils **5** in die Blockierposition und damit das Sperren des Zugangs **24** sowie das Auslesen der Seriennummer aus dem RFID-Chip **36** am Arbeitshandschuh **3** und Abspeichern in der Datenbank der Steuereinheit **8** geschehen äquivalent zum Ablauf gemäss den Figuren 2A-2D. Eine gewisse Besonderheit ergibt sich beim Verschliessen des Zugangs **24,** beim Aufsetzen des Absperrteils **5** auf den Portflansch **2** und der Verriegelung miteinander. Hierzu muss sich das Halteelement **28** zunächst in der Stellung "Auf' befinden, damit der Fortsatz **58** sich unter dem Halteelement **28** einschieben lässt. Nach erteilter Berechtigung für das Verriegeln schaltet der Aktivator **69** dann das Halteelement **28** in die Stellung "Zu", so dass Halteelement **28** und Fortsatz **58** miteinander in Eingriff kommen. Die Magnetzone **57** am Absperrteil **5** trägt zur Festigkeit der Verbindung zwischen Absperrteil **5** und Portflansch **2** bei.

Beabsichtigt der Bediener **9** sich Zugang **24** durch den vom Absperrteil **5** blockierten Portflansch **2** zu verschaffen und wurde die Zugriffsberechtigung erteilt, wird zuerst die Maschinerie **13** kontrolliert angehalten. Danach wird die Freigabe über den Microcontroller **64** an den Aktivator **69** übermittelt, und dieser schaltet dann das Halteelement **28** in der Stellung "Auf", damit Halteelement **28** und Fortsatz **58** ausser Eingriff kommen, worauf der Bediener **9** das Absperrteil **5** entfernen kann und der Zugang **24** für den Eingriff mit dem Arbeitshandschuh **3** in die Arbeitskammer **11** frei wird. Das Zusammenspiel beider Sicherheitssensoren **21,66,** Signalverarbeitung und Stopp der Maschinerie **13** bei Signalunterbruch sowie Detektion und Registrierung des aktuellen Eingriffs, einschliesslich die Stromversorgung im Regelbetrieb und die Funktion des im Portflansch **2** eingebauten Akkus **60** als Notaggregat bei Stromausfall, entsprechen der Beschreibung zu den Figuren 2A-2D.

### Figuren 4E und 4F

Dieses Figurenpaar betrifft die Anordnung weiterhin in *dritter Ausführungsform,* nun aber in drahtloser Version. Das Absperrteil **5** ist vom Portflansch **2** entfernt, so dass der Zugang **24** frei ist und der zuvor autorisierte Bediener **9** mit dem Arbeitshandschuh **3** in die Arbeitskammer **11** hineinlagen kann.

### Aufbau der Anordnung

Bei den nicht mehr vorhandenen beiden Kabeln **67,68** zur Signalleitung bzw. Stromversorgung, der alleinigen Strombereitstellung vom im Portflansch **2** eingebauten Akku **60** und der weiterhin fehlenden Stromzuführung an das Absperrteil **5,** ist - quasi unverändert - der aktive Sicherheitssensor **21'** im Portflansch **2** integriert und sitzt der passive Sicherheitssensor **66** am Absperrteil **5.** Der Arbeitshandschuh **3** ist wiederum mit einem RFID-Chip **36** bestückt. Dem Verbund aus externer Steuereinheit **8** und Sicherheitsrelais **81** ist wieder der Sender/Empfänger **80** zugeschaltet.

### Funktionsweise der Anordnung

Allein der Akku **60** im Portflansch **2** sorgt für die Stromversorgung der im Portflansch **2** enthaltenen Elektronikkomponenten **21', 61, 62, 64, 65** und **69.** Ferner, etwas zum Figurenpaar 3E+3F und zur Figurenfolge 4A-4D abweichend, geschieht beim Abnehmen des Absperrteils **5** vom Portflansch **2,** was erst nach erteilter Autorisation und Umschaltung des Halteelements **28** in die Stellung "Auf" ermöglicht wird, Folgendes: Der auf dem Absperrteil **5** angeordnete passive Sicherheitssensor **66** entfernt sich vom im Portflansch **2** sitzenden aktiven Sicherheitssensor **21',** worauf Letzterer ein Signalunterbruch feststellt. Der aktive Sicherheitssensor **21'** übermittelt an sich kontinuierlich sein Signal drahtlos über das Sende-/Empfangselement **65** an den Sender/Empfänger **80** und dieser die Daten dann drahtgebunden an das Sicherheitsrelais **81.** Aufgrund des Signalunterbruchs stoppt das Sicherheitsrelais **81** die Maschinerie **13,** bzw. blockiert sie, falls diese nicht eingeschaltet war.

### Figuren 5A bis 6B

Mit dem Figurenpaar 5A+5B wird ein Handschuheinsatz **4** illustriert, der sich aus einem Arbeitshandschuh **3,** einem Fixierteil **40,** einer Versiegelung **41** und einem Absperrteil **5** zusammensetzt. Das Figurenpaar 6A+6B betrifft einen Handschuheinsatz **4,** zu dem anstelle des Absperrteils **5** eine Abdeckung **7** gehört.

Gemäss Stand der Technik baut man in die Portflansche **2** von Containments **1** herkömmliche Arbeitshandschuhe **3** ein (siehe Figur 1). Dabei wird der Arbeitshandschuh **3** über einen zumeist ausbaubaren Ring gezogen und üblicherweise mit O-Ringen abgedichtet. Zur Vorbereitung für den Start des Produktionsmodus' am Containment **1** ist bereits eine Kontrolle des Arbeitshandschuhs **3** auf Dichtheit - mittels Prüfgerätschaft - zwingend vorgeschrieben, was am Standort, z.B. beim Pharmaproduzenten, zusätzliches Equipment und Zeit erfordert. Ferner muss die komplette, der Arbeitskammer **11** zugewandte Aussenfläche **34** des Arbeitshandschuhs **3** zusammen mit dem Containment **1** dekontaminiert werden. Hierzu werden in der Regel sogenannte Handschuhstrecker (siehe z.B. von der Anmelderin stammend CH 707 655 A1) in den Arbeitshandschuh **3** eingeführt, um durch das Aufspannen mit der z.B. angewendeten H₂O₂-Begasung alle Flächenareale mit ausreichender Intensität zu behandeln. Aufgrund der grossen und stark geformten Aussenfläche **34** bedarf es einer entsprechend langen Dekontaminationszeit. Insbesondere bei aseptisch oder toxisch betriebenen Containments **1** sind häufige Dekontaminationen bzw. Reinigungen nötig, dies dann oftmals mit dem Erfordernis, ganz neue Arbeitshandschuhe **3** einzubauen, so dass sich der zuvor beschriebene Aufwand wiederholt. Somit erwächst das Bedürfnis, einen Arbeitshandschuh so zu gestalten, dass dieser zum Schutz gegen den unautorisierten Eingriff ein Absperrteil selbst bereitstellt oder in Kombination mit einem separaten Absperrteil einsetzbar ist, und sich zugleich der Aufwand vor dem Gebrauch des Arbeitshandschuhs **3** am Standort des damit ausgestatteten Containments **1,** z.B**.** beim Pharmaproduzenten, deutlich verringert.

### Figuren 5A und 5B

Dieses Figurenpaar betrifft einen Handschuheinsatz **4,** der als eine in den Portflansch **2** gasdicht einsetzbare Baugruppe ausgebildet ist. Einerseits besitzt der Handschuheinsatz **4** eine entfernbare bzw. zu öffnende Versiegelung **41,** die ein ringförmiges Fixierteil **40** überspannt, und andererseits das am Fixierteil **40** gasdicht angesetzte, aber lösbare halbschalenförmige Absperrteil **5.** Das Fixierteil **40** könnte auch, je nach Geometrie des Portflansches **2,** oval beschaffen sein. Zwischen Versiegelung **41** und Absperrteil **5** liegt der vakuumiert zusammengestaucht verpackte Arbeitshandschuh **3.** Das Fixierteil **40** dient ferner zur Befestigung des offenen Handschuhendes und zur Befestigung des Handschuheinsatzes **4** am Portflansch **2.** Das Handschuhende könnte alternativ am Fixierteil **40** und/oder an der Versiegelung **41** befestigt sein. Im Fixierteil **40** ist ein RFID-Chip **46** angeordnet, der zwecks Registrierung aller neuen Handlungen am Handschuheinsatz **(4),** einschliesslich am Arbeitshandschuh **(3),** beschreibbar sein könnte. Am Arbeitshandschuh **3** sind die Innenfläche **43** und die Oberfläche **44** bezeichnet. Zwischen dem am Fixierteil **40** haftenden Absperrteil **5** und der Innenfläche **43** liegt der Innenraum **42,** während zwischen der Versiegelung **41** und der Oberfläche **44** ein Frontraum **45** definiert wird.

Das Absperrteil **5** ist vorzugsweise aus Kunststoff und weist an seinem Rand **51** einen abgekanteten, hakenartigen Fortsatz **58** auf. Vorzugsweise nahe dem Rand **51** ist ein passiver Sicherheitssensor **66** angebracht. Optional kann man, z.B. benachbart zum Rand **51,** eine Magnetzone **57** vorsehen, die nutzbar sein könnte, um das vom in den Portflansch **2** eingebauten Handschuheinsatz **4** abgenommene Absperrteil **5** ortsnah an einer geeigneten Parkstation **15** anzuhängen (siehe Figur 7G).

Der Fortsatz **58** ist zum Zusammenwirken mit einem sich vom Portflansch **2** erstreckenden schaltbaren Haltelement **28** bestimmt, um das Absperrteil **5** gegen unbefugtes Entfernen temporär zu sichern (siehe Figuren 7C+7D). Eine lösbare form- und/oder kraftschlüssige Verbindung des Absperrteils **5** am Fixierteil **40** besteht z.B. aus einer Formgebung am Rand **51** und/oder Fortsatz **58** des Absperrteils **5** mit komplementärer Formgebung am Fixierteil **40,** einem Haftmittel oder einer Sollbruchstelle zwischen Fixierteil **40** und Absperrteil **5.**

Bei abgedichtet am Fixierteil **40** sitzendem Absperrteil **5** und im Zustand der unversehrten Versiegelung **41** (siehe Figur 5A) herrscht im Innenraum **42** und im Frontraum **45** ein Unterdruck. Zumindest der Frontraum **45** mit den diesem zugewandten Flächen, nämlich die Oberfläche **44** und die Innenfläche der Versiegelung **41,** sind steril. Vorzugsweise sind in der Anfangssituation auch der Innenraum **42** mit den zugewandten Flächen, nämlich die Innenfläche **43** und die Innenseite des Absperrteils **5,** steril. In der Ausgangssituation bewirkt der im Frontraum **45** bestehende Unterdruck eine konkave Krümmung der Versiegelung **41,** die einen vorteilhaft visuellen Indikator für den ordnungsgemässen Zustand des Handschuheinsatzes **4** bildet.

Hat man das Absperrteil **5** vom Fixierteil **40** entfernt, die Versiegelung **41** bleibt aber weiterhin unversehrt (siehe Figur 5B), ist der Innenraum **42** zur Atmosphäre hin offen. Auch der zuvor im Frontraum **45** des Handschuheinsatzes **4** herrschende Unterdruck gleicht sich durch die Elastizität von Arbeitshandschuh **3** und Versiegelung **41** dem Atmosphärendruck an, so dass die zuvor konkave Krümmung der Versiegelung **41** durch den sich einstellenden Druckausgleich aufgehoben wird.

Der fabrikmässig vorsterilisierte, verpackte und für den Einbau bereits weitgehend vorbereitete Handschuheinsatz **4** ergibt am Standort des Containments **1,** z.B. für den Pharmaproduzenten, eine markante Ersparnis an Zeit- und Geräteaufwand und zugleich eine erhöhte Produktsicherheit. Das bei den herkömmlichen Arbeitshandschuhen **3** beim Einbau in den Portflansch **2** erforderliche Überziehen auf den dafür vorgesehenen Ring entfällt. Der Handschuheinsatz **4** mit dem Fixierteil **40** lässt sich in sehr praktikabler Weise, z.B. mittels einer gasdichten Einschraub-oder arretierbaren Rast-, Bajonett- oder Klippmechanik, als Baugruppe in den Portflansch **2** einsetzen, und senkt dadurch gleichzeitig das Risiko von Einbaufehlern. Der Handschuheinsatz **4** wird bei der fabrikmässigen Herstellung auf Dichtheit geprüft und anschliessend vakuumiert verpackt, wobei eine erhalten gebliebene konkave Krümmung der unter mechanischer Spannung stehenden Versiegelung **41,** die fortbestehende Dichtheit, also den ordnungsgemässen Zustand anzeigt. Die ansonsten bei herkömmlichen Arbeitshandschuhen **3** nach dem Einbau zwingend durchzuführende Dichtheitsprüfung ist beim Handschuheinsatz **4** verzichtbar. Die bereits werksseitig vorgenommene Sterilisation des Handschuheinsatzes **4** mittels Strahlungsquelle oder Begasungseinrichtung ergibt einen höheren Reinheitsgrad als eine Dekontamination während des im Containment **1** eingebauten Zustands. Überdies verkürzt sich die Dekontaminationszeit für den eingebauten vorsterilisierten Handschuheinsatz **4** gegenüber herkömmlichen Arbeitshandschuhen **3,** da vom Handschuheinsatz **4** nur mehr die der Arbeitskammer **11** zugewandte Aussenfläche der Versiegelung **41** mit dekontaminiert werden muss, nicht mehr jedoch die gesamte diffizil strukturierte Aussenfläche **34** des Arbeitshandschuhs **3.**

### Figuren 6A und 6B

Dieses Figurenpaar betrifft ebenfalls einen in einen Portflansch **2** gasdicht einsetzbaren vorsterilisierten Handschuheinsatz **4,** welcher sich gegenüber vorhergehendem Figurenpaar 5A+5B nur dadurch unterscheidet, dass anstelle des zuvor vorhandenen Absperrteils **5** nun eine in Funktion und Konstruktion einfachere Abdeckung **7** vorgesehen ist. Wiederum vorhanden sind Versiegelung **41,** Fixierteil **40** und der vakuumiert zusammengestaucht verpackte Arbeitshandschuh **3,** nun allerdings von der schalenförmigen Abdeckung **7** abgeschirmt, die am Fixierteil **40** gasdicht, aber lösbar angesetzt ist.

Das von der Versiegelung **41** überspannte Fixierteil **40,** in welchem der RFID-Chip **46** sitzt, dient erneut zur Befestigung des offenen Handschuhendes und zur Befestigung auch dieses Handschuheinsatzes **4** am Portflansch **2.** Auch hier könnte das Handschuhende alternativ am Fixierteil **40** und/oder an der Versiegelung **41** befestigt sein. Gleichfalls vorhanden sind Innenfläche **43** und Oberfläche **44** sowie der zwischen Versiegelung **41** und der Oberfläche **44** liegende Frontraum **45.** Lediglich der Innenraum **42** ist nun als zwischen der Innenfläche **43** und der am Fixierteil **40** haftenden Abdeckung **7** liegend zu definieren. Infolge der beschränkten Funktion der Abdeckung **7** - nicht mehr als Absperrteil **5** zu verwenden -, entfallen bei der Abdeckung **7** der passive Sicherheitssensor **66** und der Fortsatz **58.**

Auch die Abdeckung **7** ist vorzugsweise aus Kunststoff und könnte benachbart zum Rand **71** eine Magnetzone **77** aufweisen, welche für den gleichen Zweck, wie die Magnetzone **57** am Absperrteil **5,** nützlich wäre (vergleiche Figur 7G). Eine lösbare form- und/oder kraftschlüssige Verbindung der Abdeckung **7** am Fixierteil **40** besteht z.B. aus einer Formgebung am Rand **71** der Abdeckung **7** mit komplementärer Formgebung am Fixierteil **40,** einem Haftmittel oder einer Sollbruchstelle zwischen Fixierteil **40** und Abdeckung **7.**

Die Druckverhältnisse im und am Handschuheinsatz **4,** bei abgedichtet am Fixierteil **40** sitzender Abdeckung **7** und im Zustand der unversehrten Versiegelung **41,** die sich daran anpassende konkave Krümmung der Versiegelung **41** sowie die sterilen Bereiche (siehe Figur 6A), sind zum Handschuheinsatz **4** im Zustand gemäss Figur 5A, äquivalent. Analogie zur Situation gemäss Figur 5B gilt bei vom Fixierteil **40** entfernter Abdeckung **7** und weiterhin unversehrter Versiegelung **41** hinsichtlich aufgehobener Krümmung der Versiegelung **41** und des sterilen Bereichs im Frontraum **45** (siehe Figur 6B).

### Figuren 7A und 7B

Dieses Figurenpaar illustriert die Anordnung mit dem Handschuheinsatz **4** gemäss den Figuren 5A+5B in einer *vierten Ausführungsform* und drahtgebundener Version, mit dem Absperrteil **5** als des zum Handschuheinsatz **4** komplettierten Arbeitshandschuhs **3.** Der Zugang **24** in die Arbeitskammer **11** steht offen. Dass der Handschuheinsatz **4** bisher noch nicht gebraucht wurde, also der innerliche vorsterilisierte Zustand gewahrt blieb und das Absperrteil **5** als lösbarer Bestandteil gasdicht am Fixierteil **40** sitzt, ist an der konkaven Krümmung der Versiegelung **41** erkennbar. Der Handschuheinsatz **4** ist zum Einbau in den Portflansch **2** bereitgestellt.

Der Portflansch **2** weist alle Elektronikkomponenten **21, 60, 61, 62, 64, 65** und **69** auf, und es sind die beiden Kabel **67,68** angeschlossen, wie bereits zu den Figuren 2B+4D beschrieben. Am Absperrteil **5** sitzt der passive Sicherheitssensor **66,** und im Fixierteil **40** des Handschuheinsatzes **4** ist der RFID-Chip **46** angeordnet. Zum Andocken des Handschuheinsatzes **4** mit dem sich vom aufsitzenden Absperrteil **5** erstreckenden Fortsatz **58,** muss das Halteelement **28** am Portflansch **2** sich in der Stellung "Auf" befinden. Es wird angenommen, dass der Bediener **9** am Halteelement **28** bereits die Stellung "Auf' so vorfindet oder autorisiert ist, den Schaltimpuls an den Aktivator **69** auszulösen. Extern vom Containment **1** befindet sich die mit dem Sicherheitsrelais **81** verbundene Steuereinheit **8.**

### Figuren 7C und 7D

Dieses Figurenpaar zeigt den fortgeschrittenen Einbau des Handschuheinsatzes **4** gemäss den Figuren 5A+5B in den Portflansch **2,** wobei weiterhin das Absperrteil **5** gasdicht am Fixierteil **40** sitzt und die Versiegelung **41** gemäss ihrer konkaven Krümmung intakt ist. Zur Veranschaulichung der möglichen Variationsbreite bei der Gestaltung der Schutzanordnung ist hier die drahtlose Version dargestellt. Daher ist dem Verbund aus externer Steuereinheit **8** und Sicherheitsrelais **81** wiederum ein Sender/Empfänger **80** zugeschaltet.

Ist bei der Heranführung des Handschuheinsatzes **4** zum Einbau im Portflansch **2** eine ausreichender Nähe zwischen dem im Fixierteil **40** untergebrachten RFID-Chip **46** und dem im Portflansch **2** angeordneten Sende-/Empfangselement **65** erreicht, wird die Seriennummer des Handschuheinsatzes **4** ausgelesen und mit der Datenbank in der Steuereinheit **8** abgeglichen, wonach dem Bediener **9** am Display **61** eine korrekte oder fehlerhafte Zuordnung zwischen Portflansch **2** und herangeführtem Handschuheinsatz **4** angezeigt wird. Bei fehlerhafter Zuordnung wird die Verriegelung zwischen Fortsatz **58** und Halteelement **28** verweigert, was ein Handeln des Bedieners **9** erfordert, nämlich entweder die Bereitstellung eines passenden Handschuheinsatzes **4** oder - wenn möglich - ein Überschreiben der Eintragung in der Datenbank, um weiterzufahren.

Wenn der Einbau an sich beendet ist, muss der Bediener **9** über die Erfassungseinheit **62** seine Identifikation eingeben, um dessen Autorisation für den Einbau zu überprüfen. Bei korrekter Zuordnung und für den Bediener **9** erteilter Autorisation, erhält der Aktivator **69** über die Steuereinheit **8** und den Microcontroller **64** den Schaltbefehl, das Halteelement **28** in die Stellung "Zu" zu schalten, wodurch Fortsatz **58** und Halteelement **28** miteinander verriegelt werden, so dass das Absperrteil **5** in Blockierposition kommt und nicht ohne Autorisation entfernt werden kann. Der Zugriff auf den im Vakuum liegenden Handschuh **3** und das Vordringen in die Arbeitskammer **11** sind gesperrt. Das korrekt erfolgte Einsetzen des Handschuheinsatzes **4** am Portflansch **2** wird über das Display **61** bestätigt. In der Datenbank der Steuereinheit **8** wird insbesondere erfasst, welcher Handschuheinsatz **4** an welchem Portflansch **2** von welchem Bediener **9** und wann eingebaut wurde.

In der Blockierposition erkennt der aktive Sicherheitssensor **21** die definierte Nähe des passiven Sicherheitssensors **66,** nimmt das Signal auf und übermittelt laufend sein Signal drahtlos über das Sende-/Empfangselement **65** an den Sender/Empfänger **80** und dieser die Daten jedoch drahtgebunden an das Sicherheitsrelais **81.** Bei dem kontinuierlichen Signalfluss bewirkt das Sicherheitsrelais **81** keine Blockierung der Maschinerie **13** in der Arbeitskammer **11,** der Betriebsmodus für Containment **1** und Maschinerie **13** können gestartet werden. In einem nächsten Schritt folgt die Dekontamination der Arbeitskammer **11,** um die unsterile Aussenfläche der Versiegelung **41** zu behandeln.

### Figuren 7E bis 7G

Diese Figurenfolge schliesst hinsichtlich Aufbau und Funktionsweise der Anordnung an das vorherige Figurenpaar 7C+7D mit der drahtlosen Version an. Hier wird nun das autorisierte Entfernen des Absperrteils **5** vom Handschuheinsatz **4** zur Herstellung der Offenposition behandelt, damit der Bediener **9** mit dem aus dem Handschuheinsatz **4** herausgeschobenen Arbeitshandschuh **3** durch den Zugang **24** in die Arbeitskammer **11** eingreifen kann.

Mit Bezugnahme auf die Darlegungen zu den Figuren 2A-2D bedarf es keiner erneuten Schilderung der geräteseitigen Schaltungen und des signalverarbeitenden Ablaufs, daher beschränkt sich die nachstehende Erörterung auf die Besonderheiten durch die Verwendung des Handschuheinsatzes **4** gemäss den Figuren 5A+5B. Somit wird davon ausgegangen, dass der Bediener **9** die Autorisation zum Entfernen des Absperrteils **5** vom Handschuheinsatz **4** erhielt, darauf das Halteelement **28** durch den Aktivator **69** bereits in die Stellung "Auf schaltete, also die Verriegelung zwischen Halteelement **28** und Fortsatz **58** aufgehoben ist. Spätestens mit dem beginnenden Entfernen des Absperrteils **5** vom Fixierteil **40** kommt es zwischen dem passiven Sicherheitssensor **66** und aktivem Sicherheitssensor **21'** zum Signalunterbruch, was eine Blockierung der Maschinerie **13** in der Arbeitskammer **11** bewirkt, wie bereits mehrfach beschrieben.

Nach gelöstem Absperrteil **5,** das sich z.B. mittels der Magnetzone **57** an der Parkstation **15** deponieren lässt, wird der Zugriff zum Arbeitshandschuh **3** geöffnet und der Innenraum **42** hin zum Aufstellraum **19** offen. Damit geht zwar an der Innenfläche **43** vom Arbeitshandschuh **3** die Sterilität verloren, nicht aber im Frontraum **45** mit den angrenzenden Flächen. Die intakte Versiegelung **41,** welche durch den einwirkenden Atmosphärendruck von der konkaven Krümmung sich nun planar aufspannt, verhindert eine aus der Arbeitskammer **11** in den Frontraum **45** vordringende Kontamination durch überströmende Gase oder Partikel.

Nun kann der Bediener **9** von aussen in den zunächst noch zusammengestauchten Arbeitshandschuh **3** eingreifen und diesen in die Richtung Arbeitskammer **11** vorstrecken, dabei wird die nun beidseits sterile Versiegelung **41** durchstossen. Eventuell vorteilhaft wäre das Öffnen der Versiegelung **41** vom Inneren der Arbeitskammer **11,** z.B. mit einem zur Maschinerie **13** gehörendem Roboter. Jeweils nach einem Eingriff ist es ratsam, den Arbeitshandschuh **3** in das noch nicht wieder verriegelte Absperrteil **5** unterzubringen. Hiernach wird das Absperrteil **5** wieder auf das Fixierteil **40** aufgesetzt und mittels Halteelement **28** und Fortsatz **58** verriegelt, so dass das Absperrteil **5** erneut in Blockierposition steht und erst bei aktueller Autorisation wieder entfernbar ist, um einen nächsten Eingriff in die Arbeitskammer **11** mit dem Arbeitshandschuh **3** durch die offene Versiegelung **41** und den Zugang **24** im Portflansch **2** zuzulassen. In der Datenbank der Steuereinheit **8** wird insbesondere erfasst, von welchem Handschuheinsatz **4,** ausgestattet mit welchem Arbeitshandschuh **3,** an welchem Portflansch **2,** von welchem Bediener **9,** wann und über welchen Zeitraum, welches Absperrteil **5** zwischen Blockierposition und Offenposition bewegt worden ist.

### Figur 8

Diese Anordnung setzt sich aus einer Kombination mit im Portflansch **2** integriertem Absperrteil **5** gemäss *erster Ausführungsform,* wie in Figur 2F am besten erkennbar, und einem im Portflansch **2** installierten Handschuheinsatz **4** mit aufgesetzter Abdeckung **7** gemäss Figur 6A, zusammen. Als drahtlose Version ist dem Verbund aus externer Steuereinheit **8** und Sicherheitsrelais **81** der Sender/Empfänger **80** zugeschaltet. Der Portflansch **2** enthält sämtliche Elektronikkomponenten **21', 60, 61, 62, 64, 65** und **69.** Hier wird angenommen, dass der Bediener **9** die Autorisation erhielt, das als Irisblende ausgebildete Absperrteil **5** in Offenposition zu bringen, was zwischen dem passiven Sicherheitssensor **66** und aktivem Sicherheitssensor **21'** zum Signalunterbruch und einer Blockierung der Maschinerie **13** in der Arbeitskammer **11** führte. Um mit dem im Handschuheinsatz **4** noch zusammengestauchtem vorsterilisiertem Arbeitshandschuh **3** in die Arbeitskammer **11** einzugreifen, muss zunächst erst die gasdicht am Fixierteil **40** sitzende Abdeckung **7** entfernt und dann mit dem vorgeschobenen Arbeitshandschuh **3** die zuvor an der Aussenfläche dekontaminierte Versiegelung **41** durchstossen, bzw. in anderer Weise geöffnet werden, z.B. vom Inneren der Arbeitskammer **11,** vorzugsweise mit einem zur Maschinerie **13** gehörendem Roboter.

### Figur 9

Diese Anordnung setzt sich aus einer Kombination mit auf den Portflansch **2** aufgesetztem haubenartigem Absperrteil **5** gemäss *zweiter Ausführungsform* und in den Portflansch **2** eingesetztem Handschuheinsatz **4** mit aufsitzender Abdeckung **7** gemäss Figur 6A zusammen. Das Absperrteil **5** befindet sich in Blockierposition, die ersten Andockelemente **25** des Portflanschs **2** sind mit dem zweiten Andockelementen **55** vom Absperrteil **5** verriegelt. Als drahtgebundene Version mit den zum Portflansch **2** führenden beiden Kabeln **67,68** ist die Steuereinheit **8** direkt mit dem Sicherheitsrelais **81** verbunden, es bedarf keines zugeschalteten Sender/ Empfängers **80.** Der aktive Sicherheitssensor **21** sitzt im Portflansch **2,** während die weiteren Elektronikkomponenten **60, 61, 62, 64, 65, 66** und **69** im Absperrteil **5** untergebracht sind. Um das Absperrteil **5** zu entfernen - in Offenposition zu bringen -, muss der Bediener **9** zunächst die Autorisation dazu einholen, um danach die am Fixierteil **40** gasdicht sitzende Abdeckung **7** abzunehmen. Schliesslich ist für den Bediener **9** der Weg frei, mit dem Arbeitshandschuh **3** die Versiegelung **41** zu durchstossen und in die Arbeitskammer **11** einzugreifen, um dort z.B. an der blockierten Maschinerie **13** eine Arbeit auszuführen.

## Patentansprüche

1. Anordnung zum Schutz gegen unautorisierten Eingriff mit einem Arbeitshandschuh **(3,4)** durch einen in einem Portflansch **(2)** vorhandenen Zugang **(24)** in ein Containment **(1),** wobei:
a) der Portflansch **(2)** in einer Frontscheibe **(12)** oder in einer Wandung eines Gehäuses **(10)** des in einem Aufstellraum **(19)** positionierten Containments **(1)** eingebaut ist;
b) am Portflansch **(2)** der Arbeitshandschuh **(3,4)** installiert ist, welcher einem Bediener **(9)** ermöglicht, geschützt in eine Arbeitskammer **(11)** des Containments **(1)** hineinzulangen;
c) bei einer Vielzahl am Containment **(1)** installierter Portflanschen **(2)** jeweils ein Arbeitshandschuh **(3,4)** am jeweiligen Portflansch **(2)** befestigt ist;
d) in der Arbeitskammer **(11)** eine Maschinerie **(13)** zur Bearbeitung eines Behandlungsguts vorhanden sein kann;
e) zur temporären Blockierung des Zugangs **(24)** ein Absperrteil **(5)** vorgesehen ist, das sich in eine Blockierposition und eine Offenposition bewegen lässt;
f) zur Aufnahme von Personaldaten des Bedieners **(9)** eine Erfassungseinheit **(62)** vorgesehen ist, die eine Verbindung zu einem Microcontroller **(64)** besitzt, um bei Korrespondenz zwischen den erfassten Personaldaten und den Daten im Microcontroller **(64)** an einen Aktivator **(69)** einen Schaltbefehl zu erteilen, wodurch sich das Absperrteil **(5)** in die Blockierposition bringen bzw. daraus in die Offenposition bewegen lässt und somit der Zugang **(24)** gesperrt bzw. zugänglich ist;
g) der Aktivator **(69)** direkt am Portflansch **(2)** oder am Absperrteil **(5)** oder auf der Frontscheibe **(12)** angeordnet ist; und
h) die Daten des Microcontrollers **(64)** direkt darin hinterlegt sind oder von einer externen Steuereinheit **(8)** stammen, **dadurch gekennzeichnet, dass**
i) das Absperrteil **(5),** in der Konfiguration als separater an den Portflansch **(2)** andockbarer bzw. davon entfernbarer Verschlusskörper, oder der Portflansch **(2)** versehen sind mit:
ja) der Erfassungseinheit **(62);**
jb) dem Microcontroller **(64);** und
jc) dem Aktivator **(69),** welcher manuell oder angetrieben betätigbar ist und der Verstellung des Absperrteils **(5)** in die Blockier- oder Offenposition dient; sowie optional mit:
jd) einem Display **(61)** und einem Akku **(60).**

2. Anordnung nach Anspruch 1, **dadurch gekennzeichnet, dass**
a) der Portflansch **(2)** einen RFID-Chip **(22)** hat; und
b) das Absperrteil **(5),** in der Konfiguration als separater an den Portflansch **(2)** andockbarer bzw. davon entfernbarer Verschlusskörper, mit einem Sende-/ Empfangselement **(65)** versehen ist; wobei
c) das Sende-/Empfangselement **(65)** dazu dient, beim Ansetzen des Absperrteils **(5)** an den Portflansch **(2)** diese Paarung zu detektieren und gemäss der in der Steuereinheit **(8)** bzw. im Microcontroller **(64)** hinterlegten Daten, das Verriegeln des Absperrteils **(5)** zuzulassen bzw. zu versagen.

3. Anordnung nach zumindest einem der Ansprüche 1 und 2, **dadurch gekennzeichnet, dass**
a) die Erfassungseinheit **(62)** zur Aufnahme von Personaldaten des Bedieners **(9)** dem jeweiligen Portflansch **(2)** oder dem jeweiligen Absperrteil **(5)** zugeordnet ist; und
b) bei Korrespondenz zwischen den erfassten Personaldaten und den Daten im Microcontroller **(64)** an den Aktivator **(69)** der Schaltbefehl ergeht, um dem Bediener **(9)** zu ermöglichen, dieses bestimmte Absperrteil **(5)** an diesem bestimmten Portflansch **(2)** aufzusetzen und in die Blockierposition bringen bzw. zu entriegeln und von diesem bestimmten Portflansch **(2)** abzunehmen, wodurch der Zugang **(24)** gesperrt bzw. zugänglich ist.

4. Anordnung nach zumindest einem der Ansprüche 1 bis 3, **dadurch gekennzeichnet, dass** die Erfassungseinheit **(62)** zur Aufnahme von Personaldaten des Bedieners **(9)** vorhanden ist:
a) im jeweiligen Portflansch **(2);** oder
b) im jeweiligen Absperrteil **(5);** oder
c) für sämtliche betroffenen Portflansche **(2)** und Absperrteile **(5)** des Containments **(1)** in einem mobilen Gerät, z.B. einem Tabletcomputer.

5. Anordnung nach zumindest einem der Ansprüche 1 bis 4, **dadurch gekennzeichnet, dass** das Absperrteil **(5)**
a) direkt in den Portflansch **(2)** integriert und schwenkbar, aufspannbar, jalousieartig oder expandierbar ausgebildet ist; oder
b) als separater an den Portflansch **(2)** andockbarer bzw. davon entfernbarer Verschlusskörper beschaffen ist; oder
c) lösbarer Bestandteil eines zu einem Handschuheinsatz **(4)** komplettierten Handschuhs **(3)** ist.

6. Anordnung nach Anspruch 5, **dadurch gekennzeichnet, dass**
a) das Absperrteil **(5),** in der Konfiguration als im Portflansch **(2)** integrierter Verschlusskörper, und der Portflansch **(2)** jeweils mit einem Sicherheitssensor **(21,66;66,21')** versehen sind; und
b) die beiden Paare von Sicherheitssensoren **(21,66;66,21')** dazu dienen, im Zusammenwirken mit einem externen Sicherheitsrelais **(81),** die Stellung des Absperrteils **(5)** im Portflansch **(2)** zu erfassen und bei offenstehendem Absperrteil **(5)** ein automatisches Blockieren der Maschinerie **(13)** zu schalten.

7. Anordnung nach Anspruch 5, **dadurch gekennzeichnet, dass**
a) das Absperrteil **(5),** in der Konfiguration als separater an den Portflansch **(2)** andockbarer bzw. davon entfernbarer Verschlusskörper, und der Portflansch **(2)** jeweils mit einem Sicherheitssensor **(21,66;66,21')** versehen sind; und
b) die beiden Sicherheitssensoren **(21,66;66,21')** dazu dienen, im Zusammenwirken mit einem externen Sicherheitsrelais **(81),** die Stellung des Absperrteils **(5)** in Relation zum Portflansch **(2)** zu erfassen und bei Distanzierung des Absperrteils **(5)** vom Portflansch **(2)** ein automatisches Blockieren der Maschinerie **(13)** zu schalten.

8. Anordnung nach Anspruch 5, **dadurch gekennzeichnet, dass**
a) das Absperrteil **(5),** in der Konfiguration als mit dem Handschuheinsatz **(4)** lösbar verbundener Verschlusskörper, der am Portflansch **(2)** verriegelbar bzw. davon abnehmbar ist, und der Portflansch **(2)** jeweils mit einem Sicherheitssensor **(21,66;66,21')** versehen sind; und
b) die beiden Paare von Sicherheitssensoren **(21,66;66,21')** dazu dienen, im Zusammenwirken mit einem externen Sicherheitsrelais **(81),** die Stellung des Absperrteils **(5)** in Relation zum Portflansch **(2)** zu erfassen und bei Distanzierung des Absperrteils **(5)** vom Portflansch **(2)** ein automatisches Blockieren der Maschinerie **(13)** zu schalten.

9. Anordnung nach zumindest einem der Ansprüche 6 bis 8, **dadurch gekennzeichnet, dass**
a) der Steuereinheit **(8)** und dem damit jeweils pro Portflansch **(2)** zusammenwirkenden Sicherheitsrelais **(81)** jeweils ein Sender/Empfänger **(80)** zugeordnet ist; und
b) der aktive Sicherheitssensor **(21')** im Portflansch **(2)** bzw. im Absperrteil **(5)** zum Erkennen dient, ob der komplementäre passive Sicherheitssensor **(66)** präsent ist, wobei ein Sende-/Empfangselement **(65)** eine Nichtpräsens des passiven Sicherheitssensors **(66)** drahtlos zum Sender/Empfänger **(80)** signalisiert, der Sender/Empfänger **(80)** darauf die Nichtpräsenz des passiven Sicherheitssensors **(66)** an das Sicherheitsrelais **(81)** weitermeldet und die Maschinerie **(13)** automatisch blockiert.

10. Anordnung nach Anspruch 9, **dadurch gekennzeichnet, dass**
a) jeder Arbeitshandschuh **(3,4)** einen RFID-Chip **(36,46)** aufweist, welcher eine individuelle Seriennummer und vorzugsweise zusätzlich seine Herstellungsdaten abgespeichert hat, die sich mittels des Sende-/Empfangselements **(65)** auslesen lassen und in der Steuereinheit **(8)** und/oder im Microcontroller **(64)** hinterlegt sind;
b) jede neue Handlung am Portflansch **(2)** und am Arbeitshandschuh **(3,4)** wird mittels der Steuereinheit **(8)** erfasst und darin zum betreffenden Arbeitshandschuh **(3,4)** abgespeichert, also den individuellen Lebenslaufdaten hinzugefügt.

11. Anordnung nach Anspruch 10, **dadurch gekennzeichnet, dass**
a) die Herstellungsdaten jedes Arbeitshandschuhs **(3,4)** umfassen können:
aa) die individuelle Seriennummer;
ab) das Herstellungsdatum;
ac) die Handschuhgrösse;
ad) die Materialart;
ae) das angewendete Sterilisationsverfahren;
af) das maximale Verwendungsdatum; und
b) die Lebenslaufdaten jedes Arbeitshandschuhs **(3,4)** umfassen können:
ba) das Installationsdatum in einen Portflansch **(2);**
bb) die Personaldaten des Installateurs;
bc) die Kennung an welchem Portflansch **(2)** die Installation erfolgte;
bd) wann, wie oft und von welchem Bediener **(9)** das Absperrteil **(5)** am betreffenden Arbeitshandschuh **(3,4)** in die Blockierposition gebracht bzw. daraus in die Offenposition bewegt wurde;
be) Zeitpunkt und Zählung der Anzahl von Dekontaminationszyklen an der Arbeitskammer **(11)** des Containments **(1)** sowie der maximal zulässigen Anzahl von Dekontaminationszyklen;
bf) Zeitpunkt und Anzahl der durchgeführten Lecktests am betreffenden Arbeitshandschuh **(3,4);**
bg) die Chargen und Produkte, welche in der Arbeitskammer **(11)** des Containments **(1)** gehandhabt werden und bei denen der betreffende Arbeitshandschuh **(3,4)** in Verwendung ist;
bh) vom Bediener **(9)** manuell einzugebende spezielle Vorkommnisse; und
bi) die Personaldaten des Installateurs, welcher den Ausbau und die Entsorgung des betreffenden Arbeitshandschuhs **(3,4)** durchführt.

12. Anordnung nach zumindest einem der Ansprüche 6, 10 und 11, **dadurch gekennzeichnet, dass** der Portflansch **(2)** versehen ist mit:
a) der Erfassungseinheit **(62);**
b) dem Microcontroller **(64);** und
c) dem Aktivator **(69),** welcher manuell oder angetrieben betätigbar ist und der Verstellung des Absperrteils **(5)** in die Blockier- oder Offenposition dient; sowie optional mit:
d) einem Display **(61)** und einem Akku **(60).**

13. Anordnung nach zumindest einem der Ansprüche 1 bis 12, **dadurch gekennzeichnet, dass**
a) die Erfassungseinheit **(62)** zur Aufnahme biometrischer Kennzeichen des Bedieners **(9),** eines vom Bediener **(9)** einzugebenden Codes oder der elektronischen Daten eines vom Bediener **(9)** vorzuweisenden Datenträgers bestimmt ist; und
b) die von der Erfassungseinheit **(62)** vom Bediener **(9)** aufgenommene Kennung, im Zusammenwirken mit dem Microcontroller **(64),** dem jeweils aktiv werdenden Bediener **(9)** durch Schalten des Aktivators **(69),** je nach im Microcontroller **(64)** hinterlegten Daten bzw. über die Steuereinheit **(8)** eingeholter Daten, die Autorisation zur Verstellung des Absperrteils **(5)** in die Blockier-oder Offenposition am betreffenden Portflansch **(2)** erteilt oder ansonsten verweigert.

14. Anordnung nach zumindest einem der Ansprüche 1 bis 13, **dadurch gekennzeichnet, dass** der Arbeitshandschuh **(3)** zu einer in den Portflansch **(2)** gasdicht einsetzbaren Baugruppe, in Gestalt eines Handschuheinsatzes **(4),** komplettiert ist und besteht aus einer einerseits angeordneten entfernbaren bzw. zu öffnenden Versiegelung **(41),** andererseits dem von der Baugruppe lösbaren halbschalenförmigen Absperrteil **(5)** und dem zwischen beiden vakuumiert verpackten Arbeitshandschuh **(3).**

15. Anordnung nach Anspruch 14, **dadurch gekennzeichnet, dass** der als Baugruppe beschaffene Handschuheinsatz **(4)** ferner besitzt:
a) ein ringförmiges oder ovales Fixierteil **(40),** das zur Befestigung am Portflansch **(2)** dient;
b) einen Fortsatz **(58),** der zum Zusammenwirken mit einem sich vom Portflansch **(2)** erstreckenden schaltbaren Haltelement **(28)** bestimmt ist, um das Absperrteil **(5)** temporär zu sichern; und
c) einen im Fixierteil **(40)** des Handschuheinsatzes **(4)** angeordneten RFID-Chip **(46).**

16. Anordnung nach zumindest einem der Ansprüche 14 und 15, **dadurch gekennzeichnet, dass** bei auf dem Handschuheinsatz **(4)** aufsitzendem Absperrteil **(5)** und im Zustand der unversehrten Versiegelung **(41)** im Innenvolumen des Handschuheinsatzes **(4)** zwischen der Versiegelung **(41)** und der Oberfläche **(44)** ein Unterdruck herrscht und das Innenvolumen mit der diesem zugewandten Fläche der Versiegelung **(41)** sowie die Oberfläche **(44)** steril sind.

17. Anordnung nach zumindest einem der Ansprüche 1 bis 13, **dadurch gekennzeichnet, dass** der Arbeitshandschuh **(3,4)** zu einer in den Portflansch **(2)** gasdicht einsetzbaren Baugruppe, in Gestalt eines Handschuheinsatzes **(4),** komplettiert ist und besteht aus einer einerseits angeordneten entfernbaren bzw. zu öffnenden Versiegelung **(41),** andererseits einer von der Baugruppe lösbaren Abdeckung **(7)** und dem zwischen beiden vakuumiert verpackten Arbeitshandschuh **(3).**

18. Anordnung nach Anspruch 17, **dadurch gekennzeichnet, dass** bei einer auf dem Handschuheinsatz **(4)** aufsitzender Abdeckung **(7)** und im Zustand der unversehrten Versiegelung **(41)** zwischen der Versiegelung **(41)** und der Oberfläche **(44)** ein Unterdruck herrscht und das Innenvolumen mit der diesem zugewandten Fläche der Versiegelung **(41)** sowie die Oberfläche **(44)** steril sind.

19. Anordnung nach zumindest einem der Ansprüche 14 bis 18, **dadurch gekennzeichnet, dass**
a) das an sich freie Ende des Handschuhs **(3)** am Fixierteil **(40)** und/oder nahe dem Fixierteil **(40)** an der Versiegelung **(41)** befestigt ist, wobei die Versiegelung **(41)** die lichte Weite des Fixierteils **(40)** zumindest im Wesentlichen überspannt; und
b) bei auf dem Handschuheinsatz **(4)** aufsitzendem Absperrteil **(5)** oder aufsitzender Abdeckung **(7),** und im Zustand intakter Versiegelung **(41),** die Versiegelung **(41)** visuell erkennbar konkav zum Handschuheinsatz **(4)** infolge des darin herrschenden Unterdrucks gekrümmt ist.

20. Anordnung nach zumindest einem der Ansprüche 17 bis 19, **dadurch gekennzeichnet, dass** der als Baugruppe beschaffene Handschuheinsatz **(4)** ferner besitzt:
a) ein Fixierteil **(40),** das zur Befestigung am Portflansch **(2)** dient;
b) einen im Fixierteil **(40)** des Handschuheinsatzes **(4)** angeordneten RFID-Chip **(46);** und
c) optional an der Abdeckung **(7)** eine Magnetzone **(77),** die zum Zusammenwirken mit dem Fixierteil **(40)** bestimmt ist, um die Abdeckung **(7)** temporär zusätzlich zu sichern.

## Claims

1. An arrangement for protecting against unauthorized intervention in a containment **(1)** through an access **(24)** present in a port flange **(2)** using a work glove **(3,4),** wherein:
a) the port flange **(2)** is installed in a front window **(12)** or in a wall of a housing **(10)** of the containment **(1)** positioned in an installation space **(19);**
b) the work glove **(3,4)** is installed on the port flange **(2)** and allows an operator **(9)** to enter a work chamber **(11)** of the containment **(1)** in a protected manner;
c) in the event that multiple port flanges **(2)** are installed on the containment **(1),** there is one work glove **(3,4)** fastened to each port flange **(2);**
d) equipment **(13)** for processing a material to be treated can be provided in the work chamber **(11);** and
e) to temporarily block access **(24),** a shut-off part **(5)** is provided, which can move into a blocking position and an open position;
f) to record personal data of the operator **(9),** a capture unit **(62)** is provided, which has a connection to a microcontroller **(64),** in order to issue a switching command to an activator **(69)** if there is correspondence between the captured personal data and the data in the microcontroller **(64),** whereby the shut-off part **(5)** can be brought into the blocking position or can be moved therefrom into the open position and therefore the access **(24)** is blocked or accessible, respectively;
g) the activator **(69)** is arranged directly on the port flange **(2)** or on the shut-off part **(5)** or on the front window **(12);** and
h) the data of the microcontroller **(64)** are stored directly therein or originate from an external control unit **(8),** **characterized in that**
i) the shut-off part **(5),** in the configuration as a separate closure body which can be docked on or removed from the port flange **(2),** or the port flange **(2)** are provided with:
ja) the capture unit **(62);**
jb) the microcontroller **(64);** and
jc) the activator **(69),** which is actuatable manually or in driven fashion and serves to move the shut-off part **(5)** into the blocking or open position; and optionally with:
jd) a display **(61)** and a battery **(60).**

2. The arrangement according to claim 1, **characterized in that**
a) the port flange **(2)** has an RFID chip **(22);** and
b) the shut-off part **(5),** in the configuration as a separate closure body which can be docked on or removed from the port flange **(2),** is provided with a transmitting/receiving element **(65);** wherein
c) the transmitting/receiving element **(65)** is used, when placing the shut-off part **(5)** on the port flange **(2),** to detect this pairing and to permit or refuse the locking of the shut-off part **(5)** according to the data stored in the control unit **(8)** or in the microcontroller **(64).**

3. The arrangement according to at least one of claims 1 and 2, **characterized in that**
a) the capture unit **(62)** for recording personal data of the operator **(9)** is assigned to the corresponding port flange **(2)** or the corresponding shut-off part **(5);** and
b) if there is correspondence between the captured personal data and the data in the microcontroller **(64),** the activator **(69)** receives the switching command in order to allow the operator **(9)** to fit this specific shut-off part **(5)** to this specific port flange **(2)** and to bring it into the blocking position or to unlock it and to remove it from this specific port flange **(2),** whereby the access **(24)** is blocked or accessible.

4. The arrangement according to at least one of claims 1 to 3, **characterized in that** the capture unit **(62)** for recording personal data of the operator **(9)** is provided:
a) in the corresponding port flange **(2);** or
b) in the corresponding shut-off part **(5);** or
c) for all relevant port flanges **(2)** and shut-off parts **(5)** of the containment **(1)** in a mobile device, for example a tablet computer.

5. The arrangement according to at least one of claims 1 to 4, **characterized in that** the shut-off part **(5)**
a) is integrated directly in the port flange **(2)** and can be formed in a pivotable, stretchable, shutter-like or expandable manner; or
b) is formed as a separate closure body that can be docked on or removed from the port flange **(2);** or
c) is a releasable part of a glove **(3),** added to form a glove insert **(4).**

6. The arrangement according to claim 5, **characterized in that**
a) the shut-off part **(5),** in the configuration as a closure body integrated in the port flange **(2),** and the port flange **(2)** are each provided with a safety sensor **(21,66;66,21');** and
b) the two pairs of safety sensors **(21,66;66,21')** are used, in cooperation with an external safety relay **(81),** to detect the position of the shut-off part **(5)** in the port flange **(2)** and, when the shut-off part **(5)** is open, to activate an automatic blocking of the equipment **(13).**

7. The arrangement according to claim 5, **characterized in that**
a) the shut-off part **(5),** in the configuration as a separate closure body which can be docked on and removed from the port flange **(2),** and the port flange **(2)** are each provided with a safety sensor **(21,66;66,21');** and
b) the two safety sensors **(21,66;66,21')** are now used, in cooperation with an external safety relay **(81),** to capture the position of the shut-off part **(5)** in relation to the port flange **(2)** and, when the shut-off part **(5)** is distanced from the port flange **(2),** to activate an automatic blocking of the equipment **(13).**

8. The arrangement according to claim 5, **characterized in that**
a) the shut-off part **(5),** in the configuration as a closure body which is releasably connected to the glove insert **(4)** and which can be locked on and removed from the port flange **(2),** and the port flange **(2)** are each provided with a safety sensor **(21,66; 66,21');** and
b) the two pairs of safety sensors **(21,66; 66,21')** serve, in cooperation with an external safety relay **(81),** to capture the position of the shut-off part **(5)** in relation to the port flange **(2)** and, when the shut-off part **(5)** is distanced from the port flange **(2),** to activate an automatic blocking of the equipment **(13).**

9. The arrangement according to at least one of claims 6 to 8, **characterized in that**
a) the control unit **(8)** and the safety relay **(81)** cooperating therewith per port flange **(2)** is in each case assigned a transmitter/receiver **(80);** and
b) the active safety sensor **(21')** in the port flange **(2)** or in the shut-off part **(5)** serves to identify whether the complementary passive safety sensor **(66)** is present, wherein a transmitting/receiving element **(65)** wirelessly signals an absence of the passive safety sensor **(66)** to the transmitter/receiver **(80),** whereupon the transmitter/receiver **(80)** communicates the absence of the passive safety sensor **(66)** to the safety relay **(81)** and automatically blocks the equipment **(13).**

10. The arrangement according to claim 9, **characterized in that**
a) each work glove **(3,4)** has an RFID chip **(36,46),** which has stored thereon an individual serial number and preferably additionally its production data, which can be read by means of the transmitting/receiving element **(65)** and are stored in the control unit **(8)** and/or in the microcontroller **(64);**
b) each new action at the port flange **(2)** and at the work glove **(3,4)** is captured by means of the control unit **(8)** and is stored therein for the relevant work glove **(3,4),** that is to say is added to the individual maintenance data.

11. The arrangement according to claim 10, **characterized in that**
a) the production data of each work glove **(3,4)** can comprise:
aa) the individual serial number;
ab) the production date;
ac) the glove size;
ad) the material type;
ae) the used sterilization method;
af) the maximum use date; and
b) the maintenance data of each work glove **(3,4)** can comprise:
ba) the date of installation in a port flange **(2);**
bb) the personal data of the installer;
bc) the identifier of the port flange **(2)** on which the installation was performed;
bd) when, how often and by which operator **(9)** the shut-off part **(5)** at the relevant work glove **(3,4)** was brought into the blocking position or moved therefrom into the open position;
be) the time and count of the number of decontamination cycles at the work chamber **(11)** of the containment **(1)** and the maximum permissible number of decontamination cycles;
bf) the time and number of the leak tests performed on the relevant work glove **(3,4);**
bg) the batches and products which are handled in the work chamber **(11)** of the containment **(1)** and for which the relevant work glove **(3,4)** is used;
bh) special instructions to be input manually by the operator **(9);** and
bi) the personal data of the installer performing the disassembly and disposal of the relevant work glove **(3,4).**

12. The arrangement according to at least one of claims 6, 10 and 11, **characterized in that** the port flange **(2)** is provided with:
a) the capture unit **(62);**
b) the microcontroller **(64);** and
c) the activator **(69),** which is actuatable manually or in driven fashion and serves to move the shut-off part **(5)** into the blocking or open position; and optionally with:
d) a display **(61)** and a battery **(60).**

13. The arrangement according to at least one of claims 1 to 12, **characterized in that**
a) the capture unit **(62)** is intended for recording biometric identifiers of the operator **(9),** a code to be input by the operator **(9),** or the electronic data of a data carrier to be presented by the operator **(9);** and
b) the identifier recorded by the capture unit **(62)** from the operator **(9),** in cooperation with the microcontroller **(64),** grants or otherwise denies the operator **(9)** who becomes active authorization to move the shut-off part **(5)** into the blocking or open position at the relevant port flange **(2)** by switching the activator **(69),** depending on the data stored in the microcontroller **(64)** or data received via the control unit **(8).**

14. The arrangement according to at least one of claims 1 to 13, **characterized in that** the work glove **(3)** is supplemented to form a module that can be inserted gas-tight into the port flange **(2),** in the form of a glove insert **(4),** and consists of a seal **(41)** that is removable or is to be opened and is arranged on one side, the half-shell-like shut-off part **(5)** that can be released from the module on the other side and the work glove **(3)** packed in vacuumed fashion between the two.

15. The arrangement according to claim 14, **characterized in that** the glove insert **(4)** provided in the form of a module also has:
a) an annular or oval fixing part **(40),** which is used for fastening to the port flange **(2);**
b) an extension **(58)** which is intended for cooperation with a switchable holding element **(28),** which extends from the port flange **(2),** in order to temporarily secure the shut-off part **(5);** and
c) an RFID chip **(46)** arranged in the fixing part **(40)** of the glove insert **(4).**

16. The arrangement according to at least one of claims 14 and 15, **characterized in that**, when the shut-off part **(5)** is mounted on the glove insert **(4)** and in the state in which the seal **(41)** is intact, a negative pressure prevails in the internal volume of the glove insert **(4)** between the seal **(41)** and the surface **(44),** and the internal volume with the face of the seal **(41)** facing said internal volume and also the surface **(44)** are sterile.

17. The arrangement according to at least one of claims 1 to 13, **characterized in that** the work glove **(3,4)** is supplemented to form a module that can be inserted gas-tight into the port flange **(2),** in the form of a glove insert **(4),** and consists of a seal **(41)** that is removable or is to be opened and is arranged on one side, of a cover **(7)** that can be released from the module on the other side and the work glove **(3)** packed in vacuumed fashion between the two.

18. The arrangement according to claim 17, **characterized in that**, when a cover **(7)** is mounted on the glove insert **(4)** and in the state in which the seal **(41)** is intact, a negative pressure prevails between the seal **(41)** and the surface **(44),** and the internal volume with the face of the seal **(41)** facing said internal volume and also the surface **(44)** are sterile.

19. The arrangement according to at least one of claims 14 to 18, **characterized in that**
a) the free end of the glove **(3)** is fastened to the fixing part **(40)** and/or to the seal **(41)** in the vicinity of the fixing part **(40),** wherein the seal **(41)** at least substantially spans the clear width of the fixing part **(40);** and
b) when the shut-off part **(5)** is mounted on the glove insert **(4)** or when the cover **(7)** is mounted and in the state in which the seal **(41)** is intact, the seal **(41)** is visually noticeably curved concavely relative to the glove insert **(4)** as a result of the negative pressure prevailing therein.

20. The arrangement according to at least one of claims 17 to 19, **characterized in that** the glove insert **(4)** provided in the form of a module also has:
a) a fixing part **(40)** which is used for fastening to the port flange **(2);**
b) an RFID chip **(46)** arranged in the fixing part **(40)** of the glove insert **(4);** and
c) optionally a magnetic zone **(77)** on the cover **(7),** which magnetic zone is intended to cooperate with the fixing part **(40)** in order to temporarily additionally secure the cover **(7).**

## Revendications

1. Dispositif de protection contre une intervention non autorisée avec un gant de travail **(3,4)** à travers un accès **(24)** existant dans une bride de hublot **(2)** dans une enceinte de confinement **(1),** dans lequel:
a) la bride de hublot **(2)** est installée dans une vitre avant **(12)** ou dans une paroi d'une boîte **(10)** de l'enceinte de confinement **(1)** positionnée dans un local d'installation **(19);**
b) le gant de travail **(3,4)** est installé sur la bride de hublot **(2)** et permet à un opérateur **(9)** de pénétrer de manière protégée dans une chambre de travail **(11)** de l'enceinte de confinement **(1);**
c) respectivement un gant de travail **(3,4)** est fixé à la bride de hublot **(2)** respective pour une pluralité de brides de hublot **(2)** installées sur l'enceinte de confinement **(1);**
d) une machinerie **(13)** pour traiter un produit à traiter peut être présente dans la chambre de travail **(11);**
e) pour un blocage temporaire de l'accès **(24),** une partie de sectionnement **(5)** est prévue qui peut être déplacée dans une position de blocage et dans une position d'ouverture;
f) pour l'enregistrement de données personnelles de l'opérateur **(9),** une unité d'acquisition **(62)** est prévue qui dispose d'une liaison avec un microcontrôleur **(64)** afin de donner un ordre de commutation à un actionneur **(69)** en cas de correspondance entre les données personnelles acquises et les données dans le microcontrôleur **(64)** de sorte que la partie de sectionnement **(5)** peut être amenée dans la position de blocage ou peut être déplacée de celle-ci à la position d'ouverture, et l'accès **(24)** est donc verrouillé ou accessible;
g) l'actionneur **(69)** est disposé directement au niveau de la bride de hublot **(2)** ou de la partie de sectionnement **(5)** ou de la vitre avant **(12);** et
h) les données du microcontrôleur **(64)** y sont mémorisées directement ou proviennent d'une unité de commande externe **(8),** **caractérisé en ce que**
i) dans la configuration d'un corps de fermeture séparé pouvant être rattaché à la bride de hublot **(2)** ou pouvant en être retiré, la partie de sectionnement **(5)** ou la bride de hublot **(2)** est munie:
ja) de l'unité d'acquisition **(62);**
jb) du microcontrôleur **(64);** et
jc) de l'actionneur **(69)** qui peut être actionné de manière manuelle ou entraînée et qui sert au réglage de la partie de sectionnement **(5)** dans la position de blocage ou d'ouverture; ainsi qu'en option:
dj) d'un affichage **(61)** et d'un accumulateur **(60).**

2. Dispositif selon la revendication 1, **caractérisé en ce que**
a) la bride de hublot **(2)** présente une puce RFID **(22);** et
b) dans la configuration d'un corps de fermeture séparé pouvant être rattaché à la bride de hublot **(2)** ou pouvant en être retiré, la partie de sectionnement **(5)** est munie d'un élément émetteur/récepteur **(65);** dans lequel
c) lorsque la partie de sectionnement **(5)** est appliquée contre la bride de hublot **(2),** l'élément émetteur/récepteur **(65)** sert à détecter cette appariement et à autoriser ou à refuser le verrouillage de la partie de sectionnement **(5)** selon les données mémorisées dans l'unité de commande **(8)** ou dans le microcontrôleur **(64).**

3. Dispositif selon au moins l'une des revendications 1 et 2, **caractérisé en ce que**
a) pour l'enregistrement de données personnelles de l'opérateur **(9),** l'unité d'acquisition **(62)** est associée à la bride de hublot **(2)** respective ou à la partie de sectionnement **(5)** respective; et
b) en cas de correspondance entre les données personnelles acquises et les données dans le microcontrôleur **(64),** l'actionneur **(69)** reçoit l'ordre de commutation afin de permettre à l'opérateur **(9)** de poser cette partie de sectionnement **(5)** déterminée sur cette bride de hublot **(2)** déterminée et de l'amener dans la position de blocage ou de la déverrouiller et de la retirer de cette bride de hublot **(2)** déterminée, de sorte que l'accès **(24)** est verrouillé ou accessible.

4. Dispositif selon au moins l'une des revendications 1 à 3, **caractérisé en ce que** l'unité d'acquisition **(62)** pour enregistrer des données personnelles de l'opérateur **(9)** se trouve:
a) dans la bride de hublot **(2)** respective; ou
b) dans la partie de sectionnement **(5)** respective; ou
c) pour toutes les brides de hublot **(2)** et parties de sectionnement **(5)** concernées de l'enceinte de confinement **(1)** dans un appareil mobile, par exemple une tablette.

5. Dispositif selon au moins l'une des revendications 1 à 4, **caractérisé en ce que** la partie de sectionnement **(5)**
a) est intégrée directement dans la bride de hublot **(2)** et est réalisée de manière pivotante, étirable, de type jalousie ou expansible; ou
b) se présente sous la forme d'un corps de fermeture séparé, pouvant être rattaché à la bride de hublot **(2)** ou pouvant en être retiré; ou
c) est une pièce amovible d'un gant **(3)** complété en insert de gant **(4).**

6. Dispositif selon la revendication 5, **caractérisé en ce que**
a) dans la configuration d'un corps de fermeture intégré dans la bride de hublot **(2),** la partie de sectionnement **(5)** et la bride de hublot **(2)** sont respectivement munies d'un capteur de sécurité **(21,66;66,21');** et
b) en coopération avec un relais de sécurité externe **(81),** les deux paires de capteurs de sécurité **(21,66;66,21')** servent à détecter la position de la partie de sectionnement **(5)** dans la bride de hublot **(2),** et si la partie de sectionnement **(5)** est ouverte, à commuter un blocage automatique de la machinerie **(13).**

7. Dispositif selon la revendication 5, **caractérisé en ce que**
a) dans la configuration d'un corps de fermeture séparé pouvant être rattaché à la bride de hublot **(2)** ou pouvant en être retiré, la partie de sectionnement **(5)** et la bride de hublot **(2)** sont respectivement munies d'un capteur de sécurité **(21,66;66,21');** et
b) en coopération avec un relais de sécurité externe **(81),** les deux capteurs de sécurité **(21,66;66,21')** servent à détecter la position de la partie de sectionnement **(5)** par rapport à la bride de hublot **(2),** et en cas d'éloignement de la partie de sectionnement **(5)** de la bride de hublot **(2),** à commuter un blocage automatique de la machinerie **(13).**

8. Dispositif selon la revendication 5, **caractérisé en ce que**
a) dans la configuration d'un corps de fermeture pouvant être relié de manière amovible à l'insert de gant **(4)** et qui peut être verrouillé sur la bride de hublot **(2)** ou en être retiré, la partie de sectionnement **(5)** et la bride de hublot **(2)** sont respectivement munies d'un capteur de sécurité **(21,66;66,21');** et
b) en coopération avec un relais de sécurité externe **(81),** les deux paires de capteurs de sécurité **(21,66;66,21')** servent à détecter la position de la partie de sectionnement **(5)** par rapport à la bride de hublot **(2),** et en cas d'éloignement de la partie de sectionnement **(5)** de la bride de hublot **(2),** à commuter un blocage automatique de la machinerie **(13).**

9. Dispositif selon au moins l'une des revendications 6 à 8, **caractérisé en ce que**
a) respectivement un émetteur/récepteur **(80)** est associé à l'unité de commande **(8)** et au relais de sécurité **(81)** coopérant avec celle-ci respectivement pour chaque bride de hublot **(2);** et
b) le capteur de sécurité actif **(21')** dans la bride de hublot **(2)** ou dans la partie de sectionnement **(5)** sert à identifier si le capteur de sécurité passif complémentaire **(66)** est présent, dans lequel un élément émetteur/récepteur **(65)** signale sans fil à l'émetteur/récepteur **(80)** une absence du capteur de sécurité passif **(66),** l'émetteur/récepteur **(80)** relayant ensuite l'absence du capteur de sécurité passif **(66)** au relais de sécurité **(81)** et bloquant automatiquement la machinerie **(13).**

10. Dispositif selon la revendication 9, **caractérisé en ce que**
a) chaque gant de travail **(3,4)** présente une puce RFID **(36,46)** sur laquelle sont enregistrés un numéro de série individuel et de préférence en plus ses données de fabrication qui peuvent être lues au moyen de l'élément émetteur/récepteur **(65),** et sont mémorisées dans l'unité de commande **(8)** et/ou dans le microcontrôleur **(64);**
b) chaque nouvelle action au niveau de la bride de hublot **(2)** et du gant de travail **(3,4)** est détectée au moyen de l'unité de commande **(8)** et enregistrée sur celle-ci pour le gant de travail **(3,4)** concerné, étant donc ajoutée aux données de cycle de vie individuelles.

11. Dispositif selon la revendication 10, **caractérisé en ce que**
a) les données de fabrication de chaque gant de travail **(3,4)** peuvent comprendre:
aa) le numéro de série individuel;
ab) la date de fabrication;
ac) la taille de gant;
ad) le type de matière;
ae) le procédé de stérilisation appliqué;
af) la date d'utilisation maximale; et
b) les données de cycle de vie de chaque gant de travail **(3,4)** peuvent comprendre:
ba) la date d'installation dans une bride de hublot **(2);**
bb) les données personnelles de l'installateur;
bc) l'identifiant indiquant sur quelle bride de hublot **(2)** l'installation a été effectuée;
bd) quand, combien de fois et par quel opérateur **(9)** la partie de sectionnement **(5)** a été amenée dans la position de blocage ou a été déplacée de celle-ci à la position ouverte sur le gant de travail **(3,4)** concerné;
be) la date et le comptage du nombre de cycles de décontamination au niveau de la chambre de travail **(11)** de l'enceinte de confinement **(1)** ainsi que le nombre admissible maximal de cycles de décontamination;
bf) la date et le nombre des contrôles de fuite effectués sur le gant de travail **(3,4)** concerné;
bg) les lots et les produits qui sont manipulés dans la chambre de travail **(11)** de l'enceinte de confinement **(1)** et pour lesquels le gant de travail **(3,4)** concerné est utilisé;
bh) des événements spécifiques à entrer manuellement par l'opérateur **(9);** et
bi) les données personnelles de l'installateur qui effectue le démontage et l'élimination du gant de travail **(3,4)** concerné.

12. Dispositif selon au moins l'une des revendications 6, 10 et 11, **caractérisé en ce que** la bride de hublot **(2)** est munie:
a) de l'unité d'acquisition **(62);**
b) du microcontrôleur **(64);** et
c) de l'actionneur **(69)** qui peut être actionné de manière manuelle ou entraînée et qui sert à régler la partie de sectionnement **(5)** dans la position de blocage ou la position d'ouverture ; ainsi qu'en option:
d) d'un affichage **(61)** et d'un accumulateur **(60).**

13. Dispositif selon au moins l'une des revendications 1 à 12, **caractérisé en ce que**
a) l'unité d'acquisition **(62)** est destinée à enregistrer des caractéristiques biométriques de l'opérateur **(9),** un code à entrer par l'opérateur **(9)** ou les données électroniques d'un support de données à présenter par l'opérateur **(9);** et
b) en coopération avec le microcontrôleur **(64),** l'identifiant de l'opérateur **(9)** enregistré par l'unité d'acquisition **(62)** accorde à l'opérateur **(9)** devenant respectivement actif par la commutation de l'actionneur **(69),** en fonction des données mémorisées dans le microcontrôleur **(64)** ou de données collectées par l'unité de commande **(8),** l'autorisation de régler la partie de sectionnement **(5)** dans la position de blocage ou la position d'ouverture sur la bride de hublot **(2)** concernée, ou la refuse par ailleurs.

14. Dispositif selon au moins l'une des revendications 1 à 13, **caractérisé en ce que** le gant de travail **(3)** est complété en un sous-ensemble pouvant être inséré de manière étanche au gaz dans la bride de hublot **(2),** sous la forme d'un insert de gant **(4),** et se compose d'une part d'un scellement **(41)** mis en place, amovible ou pouvant être ouvert, d'autre part de la partie de sectionnement **(5)** en forme de demi-coque, amovible du sous-ensemble, et du gant de travail **(3)** conditionné sous vide entre ces deux éléments.

15. Dispositif selon la revendication 14, **caractérisé en ce que** l'insert de gant **(4)** se présentant sous forme de sous-ensemble dispose en outre:
a) d'une partie de fixation **(40)** annulaire ou ovale qui sert à la fixation à la bride de hublot **(2);**
b) d'une saillie **(58)** qui est destinée à coopérer avec un élément de maintien **(28)** commutable, s'étendant à partir de la bride de hublot **(2),** afin de sécuriser la partie de sectionnement **(5)** temporairement; et
c) d'une puce RFID **(46)** disposée dans la partie de fixation **(40)** de l'insert de gant **(4).**

16. Dispositif selon au moins l'une des revendications 14 et 15, **caractérisé en ce que**, quand la partie de sectionnement **(5)** repose sur l'insert de gant **(4)** et à l'état du scellement **(41)** intact, une dépression règne dans le volume intérieur de l'insert de gant **(4)** entre le scellement **(41)** et la surface **(44),** et le volume intérieur avec la surface du scellement **(41)** tournée vers celui-ci ainsi que la surface **(44)** sont stériles.

17. Dispositif selon au moins l'une des revendications 1 à 13, **caractérisé en ce que** le gant de travail **(3,4)** est complété en un sous-ensemble pouvant être inséré de manière étanche au gaz dans la bride de hublot **(2),** sous la forme d'un insert de gant **(4),** et se compose d'une part d'un scellement **(41)** mis en place, amovible ou pouvant être ouvert, d'autre part d'un recouvrement **(7)** pouvant être retiré du sous-ensemble et du gant de travail **(3)** conditionné sous vide entre ces deux éléments.

18. Dispositif selon la revendication 17, **caractérisé en ce que**, quand le recouvrement **(7)** repose sur l'insert de gant **(4)** et à l'état du scellement **(41)** intact, une dépression règne entre le scellement **(41)** et la surface **(44),** et le volume intérieur avec la surface du scellement **(41)** tournée vers celui-ci ainsi que la surface **(44)** sont stériles.

19. Dispositif selon au moins l'une des revendications 14 à 18, **caractérisé en ce que**
a) l'extrémité du gant **(3),** libre en soi, est fixée au scellement **(41)** au niveau de la partie de fixation **(40)** et/ou près de la partie de fixation **(40),** le scellement **(41)** couvrant au moins substantiellement la largeur libre de la partie de fixation **(40);** et
b) quand la partie de sectionnement **(5)** ou le recouvrement **(7)** repose sur l'insert de gant **(4)** et à l'état du scellement **(41)** intact, le scellement **(41)** est courbé de manière visiblement concave par rapport à l'insert de gant **(4)** en raison de la dépression qui y règne.

20. Dispositif selon au moins l'une des revendications 17 à 19, **caractérisé en ce que** l'insert de gant **(4)** se présentant sous forme de sous-ensemble dispose en outre:
a) d'une partie de fixation **(40)** servant à la fixation à la bride de hublot **(2);**
b) une puce RFID **(46)** disposée dans la partie de fixation **(40)** de l'insert de **gant (4);** et
c) en option sur le recouvrement **(7),** d'une zone magnétique **(77)** qui est destinée à coopérer avec la partie de fixation **(40)** afin de temporairement sécuriser le recouvrement **(7)** davantage.
